(19) Europäisches Patentamt

European Patent Office

Office européen des brevets

(11) **EP 2 188 760 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(21) Anmeldenummer: **09772085.8**

(22) Anmeldetag: **15.06.2009**

(51) Int Cl.:
***G06K 9/46*** *(2006.01)*

(86) Internationale Anmeldenummer:
**PCT/EP2009/004280**

(87) Internationale Veröffentlichungsnummer:
**WO 2010/000385 (07.01.2010 Gazette 2010/01)**

(54) **VERFAHREN UND VORRICHTUNG ZUM ERMITTELN EINER KONTUR UND EINES MITTELPUNKTES EINES OBJEKTS**

METHOD AND APPARATUS FOR ASCERTAINING A CONTOUR AND A CENTRE OF AN OBJECT

PROCÉDÉ ET DISPOSITIF POUR DÉTERMINER UN CONTOUR ET UN POINT CENTRAL D'UN OBJET

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.06.2008 DE 102008030874**

(43) Veröffentlichungstag der Anmeldung:
**26.05.2010 Patentblatt 2010/21**

(73) Patentinhaber: **Fraunhofer-Gesellschaft zur Förderung der angewandten Forschung e.V. 80686 München (DE)**

(72) Erfinder:
• **ZERFASS, Thorsten 90408 Nürnberg (DE)**
• **BERGEN, Tobias 91054 Erlangen (DE)**
• **STECKHAN, Dirk 81827 München (DE)**

(74) Vertreter: **Schenk, Markus et al Schoppe, Zimmermann, Stöckeler & Zinkler Patentanwälte Postfach 246 82043 Pullach bei München (DE)**

(56) Entgegenhaltungen:
• **BAMFORD P ET AL: "Unsupervised cell nucleus segmentation with active contours" SIGNAL PROCESSING, ELSEVIER SCIENCE PUBLISHERS B.V. AMSTERDAM, NL, Bd. 71, Nr. 2, 15. Dezember 1998 (1998-12-15), Seiten 203-213, XP002270669 ISSN: 0165-1684**
• **MIN HU ET AL: "Automated cell nucleus segmentation using improved snake" IMAGE PROCESSING, 2004. ICIP '04. 2004 INTERNATIONAL CONFERENCE ON SINGAPORE 24-27 OCT. 2004, PISCATAWAY, NJ, USA,IEEE, Bd. 4, 24. Oktober 2004 (2004-10-24), Seiten 2737-2740, XP010786354 ISBN: 978-0-7803-8554-2**

**Beschreibung**

Ausführungsbeispiele der vorliegenden Erfindung beziehen sich auf ein Verfahren und eine Vorrichtung zur Ermittlung einer Kontur und eines Mittelpunktes eines Objekts. Ferner beziehen sich Ausführungsbeispiele auf eine Segmentierung von Leukozyten in mikroskopischen Aufnahmen von Blutausstrichen.

Ein wichtiger Bestandteil der Hämatologie ist das Differenzialblutbild. Systeme aus dem Bereich der "Computerassistierten Mikroskopie" (CAM) ermöglichen eine automatische Analyse von Blutausstrichen und unterstützen den Hämatologen bei der Klassifikation der Zellen und bilden damit eine notwendige Ergänzung für die moderne hämatologische Labordiagnostik.

Moderne Hämatologiesysteme liefern schnell, präzise und hocheffizient wichtige Informationen über die Zellpopulation des peripheren Blutes. Allerdings werden häufig in Kliniken und Laboren bis zu 40 % der Proben manuell unter dem Mikroskop nachdifferenziert. Speziell dieser letzte Schritt kann mit Hilfe eines Systems der computerassistierten Mikroskopie beschleunigt und objektiviert werden. Dabei wird sowohl der Arbeitsaufwand verringert, als auch die Qualität der Befundung gesteigert, was insbesondere auch für auffällige Blutproben gilt.

Basierend auf innovativen Konzepten der Bildverarbeitung werden Leukozyten (weiße Blutkörperchen) in Blutausstrich lokalisiert und in klinisch relevante Unterklassen klassifiziert. Hierbei werden häufig von Experten vorklassifizierte Referenzdatensätze, die auch jederzeit erweitert werden können, als Grundlage für die Klassifikation genommen.

Die sichere Erkennung und exakte Segmentierung von weißen Blutzellen in gefärbten Ausstrichen des peripheren Blutes bildet die Grundlage für die automatische, bildbasierte Erstellung des Differenzialblutbildes im Kontext der medizinischen Labordiagnostik. Häufig wird in einem ersten Schritt eine Segmentierung bei niedriger Auflösung (z. B. 10x Objektiv) zur Lokalisierung der weißen Blutzellen durchgeführt. In einem zweiten Schritt, bei höherer Auflösung (z. B. mit einem 100x Objektiv), ist die exakte Segmentierung der Zellen Voraussetzung für eine hohe Genauigkeit der folgenden Schritte der Klassifikation. Die Genauigkeit der Segmentierung bezieht sich beispielsweise auch auf eine exakte Segmentierung von Kern und Plasma der Zelle, die insbesondere wünschenswert ist, um die Merkmale für den Kern und des Plasmas separat bestimmen zu können. Die Genauigkeit der Segmentierung hat letztendlich eine entscheidende Auswirkung auf die Güte der Klassifikation der Zelle.

Die Vielfältigkeit der in einem Blutausstrich auftretenden weißen Blutzellen verbunden mit ihrer jeweils charakteristischen Farbverteilung und Texturierung, erhöhen die Schwierigkeit bei der Klassifikation im Rahmen einer vollständigen Automatisierung. Bei konventionellen Verfahren zur Segmentierung von weißen Blutzellen ist die exakte Trennung von Kern und Plasma, sowie die Separierung von angrenzenden Erythrozyten (rote Blutzellen) nicht zufrieden stellend gelöst. Ebenfalls werden von den bekannten Algorithmen nicht alle Typen von Leukozyten behandelt.

Beispiele für konventionelle Verfahren zur Segmentierung sind in den folgenden Dokumenten beschrieben: SINHA, N. und A. RAMAKRISHNAN: Automation of differential blood count. In: TENCON 2003. Conf. on convergent Technologies for Asia-Pacific Region, Bd. 2, S. 547 - 551, 2003; LIAO, Q. und Y. DENG: An a ccura te segmen ta tion method for white blood cell images. In: IEEE Intern. Symposium on Biomedical Imaging, S. 245 - 248, 2002; RAMOSER, H., V. LAURAIN, H. BISCHOF und R. ECKER: Leukocyte segmentation and classification in blood-smear images. In: 27th Annual Intern. Conf. of the Engineering in Medicine and Biology Society, S. 3.371 - 3.374, Sep. 2005; LEZORAY, O. und H. Cardot: Cooperation of color pixel classification schemes and color watershed: a study for microscopic images. IEEE Trans. on Image Processing, 11(7): 783 - 789, 2002; NILSSON, B. und A. HEYDEN: Segmentation of Dense Leukocyte clusters. S. 221 - 229, 2001; ONGUN, G., U. HALICI und K. LEBLEBICIOGLU: Automated contour detection in blood cell images by an efficient snake algorithm. Nonlinear Analysis, 47:5839 - 5847(9), 2001.

Zur Identifizierung von Regionen in einer charakteristischen Farbe oder Farbverteilung werden häufig Schwellwertverfahren genutzt. Konventionelle Schwellwertverfahren umfassen beispielsweise das Verfahren von Otsu (OTSU, N.: A threshold selection method from gray level histograms. IEEE Trans. Systems, Man and Cybernetics, 9:62 - 66, 1979) das Verfahren von Kittler (KITTLER, J. und J. ILLINGWORTH: On threshold selection using clustering criteria. IEEE Trans. Systems, Man and Cybernetics, 15(5): 652 - 654, 1985; KITTLER, J. und J. ILLINGWORTH: Minimum error thresholding. 19(1): 41 - 47, 1986) oder das Verfahren von Kapur (KAPUR, J., P. SAHOO und A. WONG: A new method for gray level picture threshol ding using the entropy of histogram. Computer Vision, Graphics and Image Processing, 29(3): 273 - 285, 1985)

Um schließlich eine kontinuierlich Kontur des Objektes oder der Zelle zu erhalten, können beispielsweise Pfadverfolgungsalgorithmen genutzt werden. Das Verfahren von Dijkstra (DIJKSTRA, E. W.: A note on two problems in connexion with graphs. In: Numerische Mathematik, Bd. 1, S. 269 - 271. Mathematisch Centrum, Amsterdam, The Netherlands, 1959) stellt ein mögliches konventionelles Pfadverfolgungsverfahren dar.

Dokument D1, "Unsupervised cell nucleus segmentation with active contours" von Pascal, Bamford und Brian Lovell offenbart, dass die Aufgabe, Zellkerne vom Zellplasma in herkömmlichen, Papanicolaou (Pap) Flecken aufweisenden zervikalen Zellbildern zu trennen, ein klassisches Problem der Bildanalyse ist, das sich als äußerst wichtig für die Entwicklung erfolgreicher Systeme zur automatischen Analyse von Pap Flecken bei der Erkennung von Gebärmutterhalskrebs erweisen kann. Obwohl einfache Schwellwertverfahren in einigen Fällen den Zellkern extrahieren können, ist eine maschinelle Untersuchung großer Bildarchive damit nur schwer durchführbar. Herkömmliche Modelle aktiver Umrisse, wie sie von Kass, Witkin und Terzopoulos (1988) eingeführt wurden, bieten eine Reihe von Vorteilen bei Anwendung auf obiges Problem, sie leiden aber unter den bekannten Nachteilen wie Initialisierung und Minimisierung. Wir zeigen, dass ein dualer aktive Umrisse Algorithmus, basierend auf einer Viterbi-Suche, fähig ist, viele dieser Probleme zu überwinden und eine 99% genaue Segmentierung einer Datenbank von 20130 mit Pap Flecken versehenen Zellbildern durchzuführen.

Ausgehend von diesem Stand der Technik besteht ein Bedarf nach einem Verfahren zur Segmentierung (z. B. von Leukozyten in Differenzialblutbildern), das - im Gegensatz zu den konventionellen Verfahren - folgende Problemstellungen löst:

(a) robuste Segmentierung verschiedener Zellklassen,

(b) robuste Segmentierung bei angrenzenden Erythrozyten und

(c) robuste Segmentierung bei Variationen in Färbung und Beleuchtung.

Außerdem ist es wünschenswert nicht nur Blutzellen zu erkennen und zu segmentieren, sondern allgemein Konturen von Objekten in digitalen Bildern zuverlässig zu erkennen, um sie anschließend klassifizieren zu können.

Diese Aufgabe wird durch ein Verfahren nach Anspruch 1 einer Vorrichtung nach Anspruch 9 oder einem Computerprogramm nach Anspruch 10 gelöst.

Der Kerngedanke der vorliegenden Erfindung besteht darin, dass in einem Verfahren zum Ermitteln einer Kontur eines Objekts in einem digitalen Bild, in dem das Objekt bezüglich eines Farbraumes einen ersten Farbtonwert und ein Hintergrund einen zweiten Farbtonwert aufweist, zunächst ein vorläufiger Objektmittelpunkt des Objekts bestimmt wird. Daran anschließend wird ausgehend von dem vorläufig bestimmten Objektmittelpunkt Kontur-Kandidatenbildpunkte bestimmt. Dies geschieht mittels von dem Objektmittelpunkt wegführender Pfade und dem Feststellen eines Wechsels von dem ersten Farbtonwert zu dem zweiten Farbtonwert, wobei die Position des Wechsels im Farbraum dem Kontur-Kandidatenbildpunkt entspricht. Alternativ kann auch ein Wechsel oder ein Sprung eines Farbgradienten in einem verwendeten Farbraum zur Identifizierung der Kontur-Kandidatenbildpunkte genutzt werden. Jeder Kontur-Kandidatenbildpunkt weist somit eine Entfernung zum vorläufigen oder zu einem verbesserten Objektmittelpunkt auf und ist bezüglich eines Polarwinkels geordnet. Ferner werden Zonen von benachbarten Kontur-Kandidatenbildpunkten bestimmt, in denen eine Änderung der Entfernungen der Kontur-Kandidatenbildpunkte oberhalb eines Schwellenwertes liegt. Zwischen zwei Zonen werden schließlich die Kontur-Kandidatenbildpunkte eliminiert, so dass die Kontur auf der Basis der verbleibenden Kontur-Kandidatenbildpunkte bestimmt wird.

Ein weiterer Kerngedanke der vorliegenden Erfindung besteht darin, dass ein Objektmittelpunkt in einem digitalen Bild, wobei eine Kontur des Objekts durch eine Vielzahl von Kontur-Kandidatenbildpunkten definiert ist, durch die folgende Schrittfolge ermittelt werden kann. Zunächst wird wie zuvor ein vorläufiger Objektmittelpunkt bestimmt. Danach erfolgt ein Bestimmen von Entfernungen zwischen der Vielzahl von Kontur-Kandidatenbildpunkte und dem vorläufigen Objektmittelpunkt. Es folgt ein Auswerten der Entfernungen, um ein Gütemaß zu erhalten, wobei das Gütemaß eine Wahrscheinlichkeit, dass der vorläufige Objektmittelpunkt mittig in der Kontur liegt, angibt. Die beschriebene Prozedur wird für einen weiteren Objektmittelpunkt wiederholt, so dass ein weiteres Gütemaß erhalten wird. Schließlich erfolgt ein Auswählen eines Objektmittelpunktes aus dem vorläufigen oder dem weiteren Objektmittelpunkt unter Nutzung des Gütemaßes und des weiteren Gütemaßes.

Das Gütemaß kann dabei beispielsweise dadurch bestimmt werden, dass zunächst eine mittlere Entfernung von den Entfernungen bestimmt wird und daran anschließend eine Schwankungsbreite der Entfernungen zu der mittleren Entfernung bestimmt wird, so dass aus der bestimmten Schwankungsbreite das Gütemaß ermittelt wird.

Anschließend erfolgt ein Ersetzen des vorläufigen Objektmittelpunktes durch einen verbesserten Objektmittelpunkt (z. B. mittels Verschiebung des vorläufigen Objektmittelpunktes). Dann erfolgt eine erneute Bestimmung der Entfernungen der Kontur-Kandidatenbildpunkte zu dem verbesserten Objektmittelpunkt. Die neu bestimmten Entfernungen können wiederum gemittelt und die Schwankungsbreite der Entfernung um den Mittelwert bestimmt werden. Sofern die Schwankungsbreite sich erhöht hat, wird der verbesserte Objektmittelpunkt verworfen, sofern sich jedoch die Schwankungsbreite verringert hat, wird der vorläufige Objektmittelpunkt durch den verbesserten Objektmittelpunkt ersetzt.

Die verbesserten Objektmittelpunkte können beispielsweise iterativ durch feiner werdende Gitter bestimmt werden, wobei jedem Gitterquadranten (oder Gitterpunkt) ein Gütewert zugeordnet wird, der die Wahrscheinlichkeit angibt, dass der wahre Objektmittelpunkt dem Gitterquadranten (oder in einer Umgebung des Gitterpunktes) liegt. Für das Beispiel einer organischen Zelle, kann der Gütewert beispielsweise dem Anteil des Gitterquadranten, der vom Zellkern eingenommen wird, entsprechen. Alternative kann der Gütewert auch danach bewertet werden, ob der Zellkernmittelpunkt im Gitterquadranten enthalten ist oder wie weit der Zellkernmittelpunkt entfernt ist.

Optional kann es vorteilhaft sein, vor der Bestimmung der Kontur des Objektes oder vor der Bestimmung des Objektmittelpunktes eine Bildvorverarbeitung vorzunehmen, wobei die Bildvorverarbeitung verschiedene Formen von Filter umfassen kann. Die Filter können beispielsweise bestimmte Farbkomponenten herausfiltern oder Strukturen anhand ihrer spezifischen Farbe sichtbar machen. Dazu können digitale Bilder beispielsweise in verschiedenen Farbschemas oder Farbräumen (z. B. RGB-Farbraum, HSV-Farbraum) transformiert werden.

Der RGB-Farbraum spezifiziert die Farbe eines Bildpunktes durch die Anteile der drei Farbkomponenten: Rot, Grün, Blau. In dem HSV-Farbraum wird die Farbe eines Bildpunktes durch einen H-Wert (Farbtyp), einen S-Wert (Saturierung) und einen V-Wert (Value oder Helligkeit) angegeben.

Die im Folgenden näher beschriebene Segmentierung bezieht sich meist auf Leukozyten - das erfindungsgemäße Verfahren ist jedoch gleichermaßen auch auf andere Objekte anwendbar, wobei Objekte beispielsweise Einschlüsse in Materialien sein können (z. B. Hohlräume, die bei einer Materialprüfung festgestellt und klassifiziert werden sollen). In weiteren Ausführungsbeispielen ist es ebenfalls möglich krankhaftes biologisches Gewebe wie beispielsweise tumorartiges Gewebe zu segmentieren und/oder zu klassifizieren. Die Klassifizierung bezieht sich dabei beispielsweise auf das Feststellen der Größe und/oder Form des Objektes, so dass das Objekt Größenklassen oder Formklassen (rund, eckig, oval, etc.) zugeordnet werden kann. Ausführungsbeispiele können somit für jede Form von Objekterkennung und Objektklassifizierung genutzt werden, die automatisiert durchgeführt werden sollen.

Die im Folgenden näher beschriebene Segmentierung von Leukozyten (als ein Beispiel für Objekte) stellt eine wichtige Komponente eines CAM-Systems für die Erstellung von Differenzialblutbildern dar. Als Eingabe kann dafür eine (Bild) Aufnahme eines Ausschnittes aus dem Objektträger dienen, wobei der Ausschnitt zumindest einen Leukozyten enthält. Üblicherweise wird eine solche Aufnahme beispielsweise mit einer 630- bis 1.000-fachen Vergrößerung erstellt, um eine ausreichende Abbildung von weißen Blutzellen zu gewährleisten. Alternative können Vergrößerungen in einem Bereich zwischen 200x und 1.500x verwendet werden. Das Eingabefeld liegt beispielsweise in Form eines RGB-Farbbildes mit einer Farbtiefe von beispielsweise acht Bit pro Kanal vor. Das Ziel ist dabei eine exakte Trennung von Leukozyten und anderen im Bild enthaltenen Objekten zu erhalten. Außerdem ist eine Trennung zwischen Kern und Plasma innerhalb des Leukozyten sinnvoll.

Ausführungsbeispiele ermöglichen eine berandungsgenaue Segmentierung des Kerns und des Plasmas z. B. bei Leukozyten, wobei im Vergleich zu konventionellen Verfahren sämtliche verschiedene Typen von Leukozyten segmentiert werden können. Außerdem können die beispielhaften Leukozyten mit angrenzenden Erythrozyten ebenfalls vollständig segmentiert werden. Gegenüber Schwankungen in der Beleuchtung und Färbung verhalten sich Ausführungsbeispiele ausgesprochen robust. Ausführungsbeispiele liefern insbesondere für weiße Blutzellen eine Segmentierung bei einer hohen Auflösung.

Ausführungsbeispiele der vorliegenden Erfindung werden nachfolgend Bezug nehmend auf die beiliegenden Zeichnungen näher erläutert. Es zeigen:

Fig. 1    ein Flussdiagramm für ein Verfahren nach einem Ausführungsbeispiel der vorliegenden Erfindung.

Fig. 2    ein Flussdiagramm für ein CAM-System;

Fig. 3    eine Darstellung für eine Veränderung von Farb- werten im Zellkern, Zellplasma und Hintergrund;

Fig. 4    eine Darstellung von Zonen mit Änderungen der radialen Entfernung oberhalb eines Schwellwertes;

Fig. 5    ein detailliertes Flussdiagramm zur Segmentie- rung;

Fig. 6a bis 6h    eine Darstellung von Zwischenresultaten der einzelnen Verfahrensschritte;

Fig. 7    eine Darstellung zur Veranschaulichung einer iterativen Suche des Zellmittelpunkts;

Fig. 8    eine Darstellung für die Eliminierung von Kontur- Kandidatenbildpunkten zwischen Stellen extremer Krümmung; und

Fig. 9    eine Darstellung einer möglichen Vorbearbeitung mittels eines Kuwaharafilters.

Bevor im Folgenden die vorliegende Erfindung anhand der Zeichnungen näher erläutert wird, wird darauf hingewiesen, dass gleiche Elemente in den Figuren mit den gleichen oder ähnlichen Bezugszeichen versehen sind und dass eine wiederholte Beschreibung dieser Elemente weg gelassen wird.

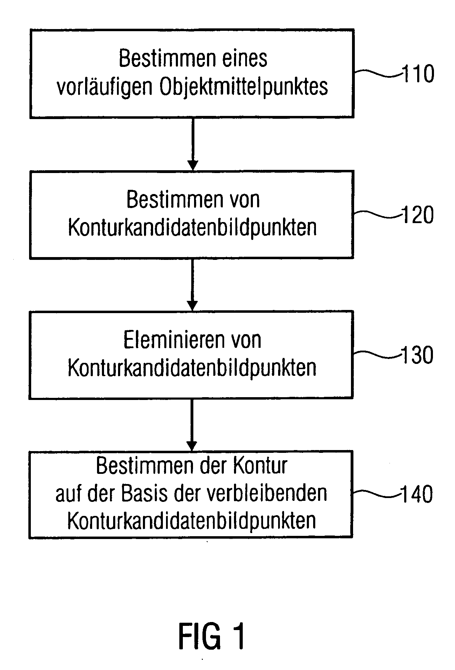

Fig. 1 zeigt ein Flussdiagramm für ein Ausführungsbeispiel der vorliegenden Erfindung. Zunächst erfolgt eine Bestimmung eines vorläufigen Objektmittelpunktes 110, wobei der vorläufige Objektmittelpunkt anhand eines digitalen Bildes zunächst geschätzt werden kann. Daran anschließend erfolgt eine Bestimmung von Kontur-Kandidatenbildpunkten 120, die beispielsweise durch einen Farbübergang oder ein Wechsel Farbgradienten entlang von Pfaden, die von dem vorläufigen Objektmittelpunkt aus weg führen, bestimmt werden. Sofern das digitale Bild allgemein durch einen Bildpunktwertebereich in einem Merkmalsraum dargestellt wird, können die Kontur-Kandidatenbildpunkte durch ein Erfassen eines Wechsels von einem ersten Abschnitt zu einem zweiten Abschnitt in dem Merkmalsraum oder durch ein Erfassen eines Überschreitens einer vorbestimmten Stärke einer Merkmalsänderung in dem Merkmalsraum bestimmt werden. Im einfachsten Fall ist der Merkmalsraum der Farbraum (z. B. RGB oder HSV), kann aber z. B. eine Transformation des Farbraums sein.

In einem nächsten Schritt werden Kontur-Kandidatenbildpunkte eliminiert 130, wobei das Eliminieren von Kontur-Kandidatenbildpunkten sich auf jene Kontur-Kandidatenbildpunkte beziehen, die zwischen Regionen extremer Krümmung im zweiten Schritt 120 festgestellt wurden.

Die extreme Krümmung kann beispielsweise durch einen Sprung (außerhalb eines Toleranzbereiches) der Entfernung eines Kontur-Kandidatenbildpunktes zu dem vorläufigen Objektmittelpunkt festgestellt werden. Nach dem Schritt des Eliminierens 130 können verbleibende Kontur-Kandidatenbildpunkte genutzt werden, um die Kontur des Objektes zu bestimmen, was beispielsweise durch eine Interpolation oder einer Pfadverfolgung zwischen den verbleibenden Kontur-Kandidatenbildpunkten geschehen kann. Eine Interpolation kann beispielsweise zum Überbrücken kleiner Abschnitte genutzt werden, währenddessen die Pfadverfolgung vorteilhaft ist, um größere Abschnitte, die z. B. durch das Eliminieren von Kontur-Kandidatenbildpunkten entstanden sind, in der Kontur zu schließen. Zur Pfadverfolgung kann beispielsweise das konventionelle Verfahren von Dijkstra verwendet werden.

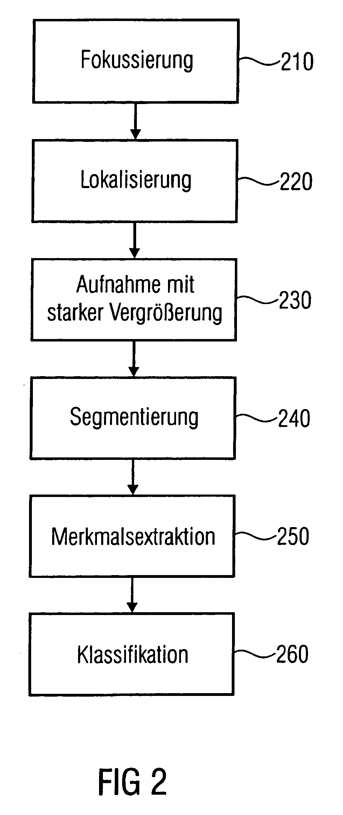

Fig. 2 zeigt ein Flussdiagramm für ein konventionelles CAM-System, welches beispielsweise zur Klassifizierung von Blutzellen genutzt werden kann. In einem ersten Schritt 210 erfolgt dabei eine Lokalisierung einer weißen Blutzelle bei beispielsweise niedriger Auflösung (z. B. mit einem Objektiv mit fünffacher, zehnfacher oder zwanzigfacher Auflösung). Im zweiten Schritt der Lokalisierung 220 wird ebenfalls eine Blutzelle, die möglichst mittig im Bild angeordnet ist, identifiziert, die dann in den Folgeschritten genauer untersucht werden wird. In einem dritten Schritt 230 erfolgt nun eine Vergrößerung der Aufnahme, so dass die in dem zweiten Schritt 220 in oder nahe der Bildmitte lokalisierte Blutzelle entsprechend vergrößert wird. Die Vergrößerung kann beispielsweise mit einem Objektiv mit mehr als 50-facher Vergrößerung oder mit einem Objektiv mit mehr als hundertfacher Vergrößerung oder mit zweihundertfacher Vergrößerung durchgeführt werden. In dem vierten Schritt 240 erfolgt daran anschließend die Segmentierung des Objekts (z. B. weiße Blutzelle), wobei dieser Schritt später durch Ausführungsbeispiele der vorliegenden Erfindung näher beschrieben wird. In einem fünften Schritt 250 erfolgt unter Nutzung der Segmentierungsergebnisse eine Merkmalsextraktion. Die Merkmalsextraktion kann beispielsweise ein Bestimmen der Größe der Zelle, der Form der Zelle (z. B. rund, oval, lang gestreckt, diffus) umfassen. Mit den Resultaten der Merkmalsextraktion im fünften Schritt 250 kann schließlich im sechsten Schritt 260 eine Klassifikation der Objekte (wie beispielsweise der weißen Blutzelle) erfolgen.

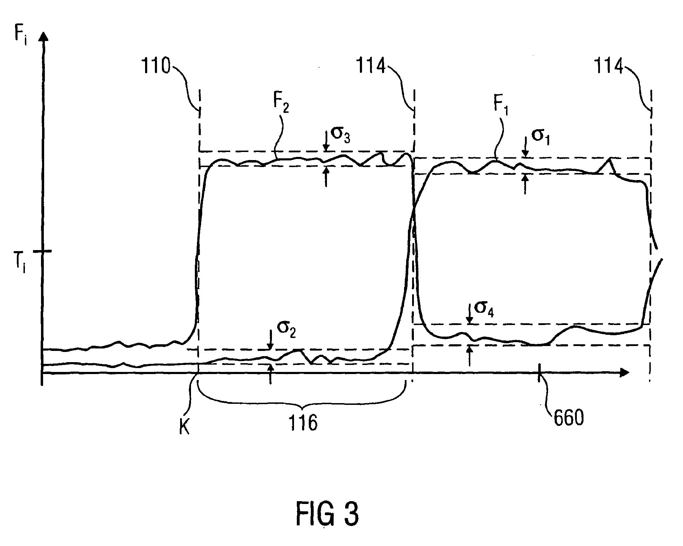

Fig. 3 gibt eine graphische Darstellung, wie sich bei einem Übergang vom Zellkern zum Zellplasma bzw. vom Zellplasma zum Hintergrund bestimmte Komponenten des Farbraumes sprunghaft verändern können. Die Änderung einer Farbkomponente kann beispielsweise eine Farbkombination im RGB-Farbraum umfassen, umfasst aber gleichermaßen auch Änderungen in der Helligkeit oder Saturierung, wenn z. B. anstatt des RGB-Farbraum der HSV-Farbraum verwendet wird. Neben Änderungen von Farbkomponenten kann ebenfalls ein Wechsel eines Farbgradienten (in dem genutzten Farbraum) zur Feststellung des Übergangs genutzt werden. Als Beispiel ist in Fig. 3 die Änderung der Farbkomponenten entlang einer Richtung gezeigt, die z.B. von dem Objektmittelpunkt 660 zu dem Kontur-Kandidatenbildpunkt K führt. Die gestrichelte Linie 114 stellt die Randkurve des Zellkerns 114 und die gestrichelte Linie 110 die Randkurve der Zellkontur (d.h. Randkurve des Zellplasmas 116) dar. Da der Zellkern eine spezifische Farbe bzw. Farbkombination aufweist, kommt es an der Grenzlinie 114 zu einem plötzlichen Wechsel der entsprechenden Farbkomponente $F_i$, die in dieser Darstellung mit F1 bezeichnet ist. Die Farbkomponente F1 weist jedoch sowohl innerhalb des Zellkerns 114 (rechts der Linie 114) als auch außerhalb des Zellkerns 114 (links der gestrichelten Linie 114) gewisse Fluktuationen σ1, σ2 auf, deren Mittelwert sich jedoch deutlich voneinander unterscheiden, beispielsweise um mehr als 30 %. Die Farbkomponente F1 kann beispielsweise auch eine Kombination zweier Farben sein, z. B. das Verhältnis von grüner zu blauer Farbe (g/b) in dem RGB-Farbraum.

Das Zellplasma weist eine andere Färbung auf als der Zellkern, so dass in dem Gebiet des Zellplasmas 116, das heißt zwischen der gestrichelten Linie 114 und der gestrichelten Linie 110, eine andere Farbkomponente (oder einer anderen Farbkombination), die hier mit F2 bezeichnet ist, einen deutlich überhöhten Wert aufweist. Auch für die weitere Farbkomponente F2 kann es innerhalb des Zellplasmas 116 als auch außerhalb des Zellplasmas 116 zu Fluktuationen σ3, σ4 kommen, wobei jedoch Mittelwerte für F2 sich innerhalb und außerhalb des Zellplasmas 116 deutlich z.B. um mehr als 30 % voneinander unterscheiden.

Die Einfärbung des Zellkerns als auch des Zellplasmas 116 und des Zellhintergrunds (links der Linie 110) erfolgt dabei durch eine entsprechend gewählte Vorverarbeitung des Blutausstriches und kann von dem gewählten Verfahren abhängig sein.

Ein einfaches Verfahren die Übergänge zwischen Zellkern und Zellplasma oder zwischen Zellplasma und Hintergrund festzustellen ist das Über- oder Unterschreiten eines Schwellwertes $T_i$ festzustellen (z. B. wenn F1 > T1 oder F2 > T2), wobei T1, T2, ... für die Farbkomponenten F1, F2, ... spezifische Schwellwerte darstellen.

Um die Kontur-Kandidatenbildpunkte K zu identifizieren, wurde ein Wechsel von einem ersten Abschnitt zu einem zweiten Abschnitt des Farbraumes verwendet und dieser Wechsel entspricht dem deutlichen Abfall der Komponente F2 bei der gestrichelten Linie 110. Das heißt, das entsprechend gewählte Verfahren sollte sensitiv für einen plötzlichen Abfall der Komponente F2 sein, nicht jedoch auf einem plötzlichen Anstieg der Komponente F2, wie er beispielsweise bei der Kerngrenzlinie 114 auftritt. Alternativ kann der Hintergrund auch durch eine spezifische Farbkomponente (z. B. die Farbkombination (r+g+b)/3) erfasst werden, so dass der Kontur-Kandidatenbildpunkt K dadurch gegeben ist, wenn beispielsweise (r+g+b)/3 = T3 gilt (bis auf eine Toleranz von beispielsweise $\pm 10\%$). Der Schwellwert T3 kann beispielsweise adaptiv für ein jeweiliges Bild bestimmt werden (z. B. in Abhängigkeit einer Durchschnittshelligkeit) und ist im Allgemeinen kein fester Schwellwert.

Die Bestimmung der Kontur-Kandidatenbildpunkte K mittels eines Wechsels von einem ersten Abschnitt zu einem zweiten Abschnitt des Farbraumes stellt eine Möglichkeit dar. Alternativ kann auch ein Wechsel oder ein Sprung eines Farbgradienten (in einem verwendeten Farbraum) zur Bestimmung der Kontur-Kandidatenbildpunkte K genutzt werden.

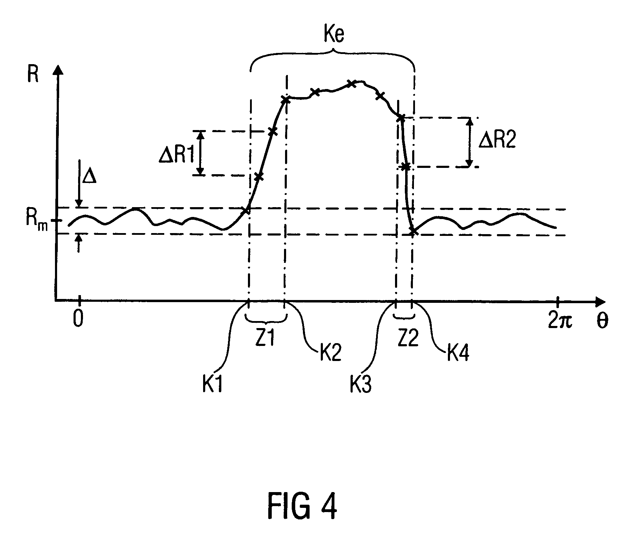

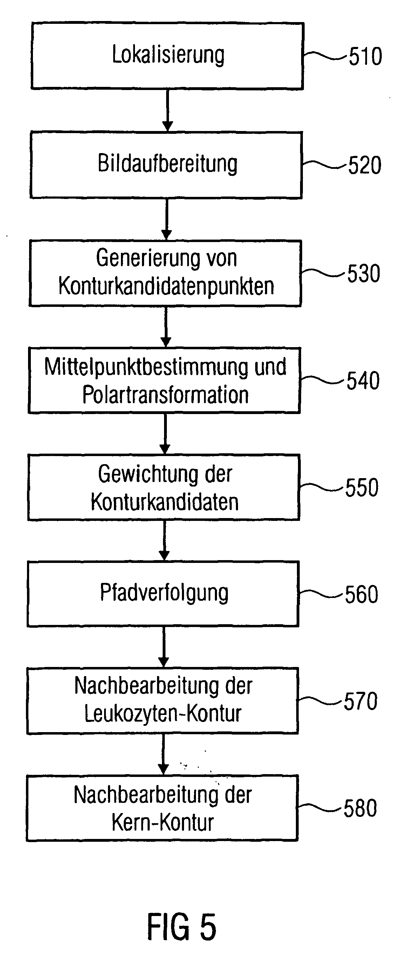

Fig. 4 zeigt eine Darstellung der radialen Entfernungen R der Kontur-Kandidatenbildpunkte K als Funktion eines Polarwinkels $\theta$, wobei R und $\theta$ polare Koordinaten für das digitale Bild darstellen. Die Kontur-Kandidatenbildpunkte sind dabei entsprechend ihres Winkels $\theta$ geordnet und ein Teil der Kontur-Kandidatenbildpunkte sind durch Kreuze dargestellt. Sofern der Mittelpunkt geeignet gewählt ist (siehe Beschreibung zu Fig. 5) schwanken die Entfernungen R der Kontur-Kandidatenbildpunkte K wenig oder kaum. Dies kann dadurch veranschaulicht werden, dass die Kontur-Kandidatenbildpunkte K um einen Entfernungsmittelwert $R_m$ lediglich in einem Bereich von $\Delta$ schwanken. Die Schwankungsbreite $\Delta$ der Entfernungen der Kontur-Kandidatenbildpunkte K ist umso kleiner, je näher die Form der weißen Blutzelle sich an einem Kreis annähert und je besser der Mittelpunkt des beispielhaften Kreises gefunden wurde. Wenn jedoch an der Zellwand der weißen Blutzelle sich beispielsweise eine rote Blutzelle angelagert hat und ebenfalls Zellwände der roten Blutzelle als Kontur-Kandidatenbildpunkte identifiziert wurden, dann gibt es Zonen Z (Z1, Z2, Z3, ...), in denen die radiale Entfernung R plötzlich stark zunimmt und im Extremfall ein Sprung vorhanden ist. Der Sprung oder die plötzlich zunehmende radiale Entfernung R der Kontur-Kandidatenbildpunkte K ist beispielsweise dadurch begründet, dass die entsprechenden Kontur-Kandidatenbildpunkte keine Konturgrenze der beispielhaften weißen Blutzelle bilden, sondern stattdessen Konturpunkte beispielsweise einer angrenzenden roten Blutzelle darstellen. Die eine Zellwand der angrenzenden roten Blutzelle befindet sich nämlich in einem deutlich größeren Abstand zu dem vorläufigen Kernmittelpunkt.

Als Beispiel zeigt die Fig. 4 eine erste Zone Z1, die mit der Position des Kontur-Kandidatenbildpunktes K1 beginnt und mit der Position eines zweiten Kontur-Kandidatenbildpunktes K2 endet. Die Zone Z1 ist dadurch charakterisiert, dass innerhalb der Zone Z1 der Zuwachs in der Entfernung R einen Wert $\Delta R1$ aufweist, der größer ist als die Schwankungsbreite $\Delta$, die noch toleriert werden kann. Zwischen dem zweiten Kontur-Kandidatenbildpunkt K2 und einem dritten Kontur-Kandidatenbildpunkt K3 zeigen die Entfernungen R der dazwischen liegenden Kontur-Kandidatenbildpunkte K wiederum nur eine geringe Schwankungsbreite auf, währenddessen zwischen dem dritten Kontur-Kandidatenbildpunkt K3 und einem vierten Kontur-Kandidatenbildpunkt K4 wiederum eine Zone Z2 ausgebildet ist, die durch eine rapide Abnahme der Entfernungen R gekennzeichnet ist. Kontur-Kandidatenbildpunkte innerhalb der zweiten Zone Z2 weisen eine Differenz $\Delta R2$ in ihrer Entfernung R auf, die größer ist als die Toleranzbreite $\Delta$. Ab dem vierten Kontur-Kandidatenbildpunkt K4 schwanken die Entfernungen der einzelnen Kontur-Kandidatenbildpunkte wiederum lediglich innerhalb der Toleranzbreite $\Delta$. Da der Polarwinkel $\theta$ lediglich Werte zwischen 0 und 2n (oder alternative zwischen -n und +n) annimmt, ist die dargestellte Funktion am Punkt 2n identisch mit der Funktion bei $\theta = 0$ ($2\pi$-periodisch).

Die Zonen Z können somit ebenfalls mittels eines Schwellwertverfahrens bestimmt werden, z. B. ist die erste Zone Z1 durch $\Delta R1 > \Delta$ und die zweite Zone Z2 durch $\Delta R2 > \Delta$ gegeben. Allgemein können die Zonen durch die Beziehen $\Delta R > T$, wobei $\Delta R$ der radiale Zuwachs von benachbarten Kontur-Kandidatenbildpunkten ist und T einen Schwellwert darstellt, der beispielsweise mit $\Delta$ übereinstimmen kann. Der Schwellwert T kann beispielsweise eine bestimmte Prozentzahl (z. B. 5% oder 10% oder 50%) der Entfernung R, auf die sich die Zunahme $\Delta R$ bezieht.

Die Kontur-Kandidatenbildpunkte Ke, die zwischen den Zonen Z1 und Z2 liegen, sind somit keine Konturpunkte des Leukozyten und sollten folglich eliminiert werden. Alternativ können die zu eliminierenden Kontur-Kandidatenbildpunkte Ke auch über die Krümmung, die eine Interpolationskurve aller Kontur-Kandidatenbildpunkte K hätte, bestimmt werden. Die Zonen Z können dass auch dadurch bestimmt werden, dass diese Krümmung einen Grenzwert überschreitet. Das ein solches Verfahren zuverlässig arbeitet, ist allerdings ein Interpolationsverfahren erforderlich, der eine Mittelung ausführt, so dass sich lokal eine nur schwach variierende Kurve (z. B. $\Delta R/R < 0{,}01$).

Fig. 5 zeigt ein detailliertes Flussdiagramm für ein Verfahren nach einem weiteren Ausführungsbeispiel der vorliegenden Erfindung, welches eine Reihe von optionalen Schritten (im Vergleich zur Fig. 1) aufweist, die das Resultat verbessern können.

In einem ersten Schritt 510 erfolgt zunächst wiederum eine Lokalisierung. Da im Eingabebild oft mehrere Leukozyten vorhanden sein können und für die weiteren Verarbeitungsschritte eine einzelne Zelle auszuwählen ist, ist häufig wünschenswert zunächst die Lokalisierung durchzuführen. Bei der Lokalisierung im ersten Schritt 510 werden zunächst beispielsweise im Bild enthaltene Leukozyten lokalisiert. Dies kann beispielsweise mittels eines Schwellwertverfahrens geschehen, bei dem die Farbinformation der einzelnen Pixel verwendet werden kann. Hierbei kann beispielsweise das Verhältnis zwischen Grün- und Blaukanal eines Eingabebildes als ein Kriterium dienen, wobei dreikanalige Farbbilder in den drei Grundfarben Rot, Grün, Blau verwendet werden. Ein Pixel, das die Eigenschaft erfüllt $g/b > T2$, wobei T2 einen Schwellenwert darstellt, wird danach als Leukozytpixel klassifiziert. Hierbei entsprechen g und b dem Grün- und Blauwert des Pixels und T2 ist ein fester Schwellwert, der empirisch ermittelt werden kann. Beispielsweise kann der Schwellwert T2 einen Wert von 1,0, 1,2 oder 1,4 aufweisen. Aus der so entstandenen Binärmaske mit verschiedenen Leukozytenregionen wird nun eine ausgewählt (lokalisiert). Diese Auswahl kann beispielsweise anhand folgender Kriterien geschehen:

(i) Eine vorgegebene Mindestgröße sollte nicht unterschritten werden. Die Mindestgröße ist dabei ein Systemparameter und kann beispielsweise absolut in Pixeln festgelegt werden. Ihr Wert berechnet sich aus einer erwarteten physischen Mindestgröße der Zellen und der Vergrößerung bzw. Auflösung des Mikroskopsystems.

(ii) Aus allen Regionen, die das Kriterium (i) erfüllen, wird diejenige gewählt, die die geringste Entfernung zum Mittelpunkt des Eingabebildes aufweist und die somit möglichst in der Mitte des Eingabebildes abgebildet ist. Dies ist dadurch zu begründen, dass nach der Lokalisierung der einzelnen Zellen bei niedriger Auflösung jede Zelle in hoher Auflösung derart angefahren wird, dass sie sich in der Mittel des Sichtfeldes befindet.

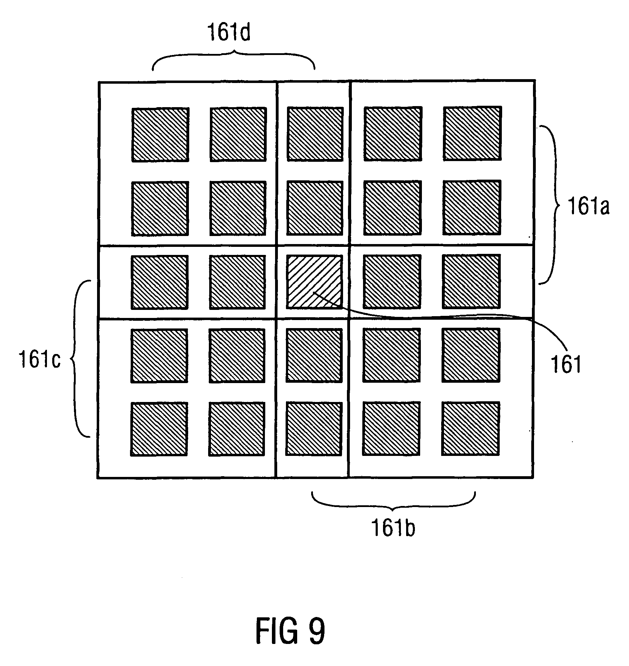

In einem zweiten Schritt 520 erfolgt eine Bildaufbereitung. Ziel der Aufbereitung des Bildes ist eine Verbesserung der Bildqualität für die anschließende Verarbeitung. Hierzu zählt beispielsweise eine Unterdrückung von störenden Strukturen wie beispielsweise ein Bildrauschen, Verschmutzungen etc. Dazu können verschiedene Standardverfahren der Bildaufbereitung genutzt werden. Mögliche Standardverfahren sind dabei eine Filterung des Eingabebildes mit einem Kanten erhaltenen Glättungsfilter, wie z. B. einen Median-Filter oder einen Kuwahara-Filter (siehe Fig. 9). Alternativ können auch anisotrope Diffusionsfilter verwendet werden.

In einem dritten Schritt 530 erfolgt eine Generierung von Kontur-Kandidatenbildpunkten. Dazu wird beispielsweise zunächst eine Menge von Kandidatenpunkten für die Leukozytenkontur generiert. Häufig findet sich die korrekte Umrandung des Leukozyten entweder an einem Übergang von Vordergrund zu Hintergrundpixel $C_{f,b}$ (= gestrichelte Linie 110 in Fig. 3) oder an einem Übergang vom Leukozyten zu einem eventuell angrenzenden Erythrozyten $C_{l,e}$. Mögliche Konturpunkte (=Kontur-Kandidatenbildpunkte) können beispielsweise dadurch erzeugt werden, dass von einem geschätzten Mittelpunkt aus innerhalb des Leukozyten geeignete Strahlen (=Pfade) nach außen verfolgt werden, so dass Kontur-Kandidaten entlang der nach außen verlaufenden Strahlen dann erzeugt werden, falls ein entsprechender Übergang (z. B. in einem Farbraum) stattfindet. Die Anzahl der nach außen verlaufenden Strahlen kann dabei so hoch gewählt sein, dass eine ausreichend dichte Menge von Kontur-Kandidatenbildpunkten erzeugt wird. Zum Beispiel kann die Anzahl der Strahlen mehr als 100, ungefähr 150 oder ungefähr 180 oder zwischen 150 und 300 liegen. Um den besagten Übergang feststellen zu können, werden Hintergrund-, Leukozyten- und Erythrozytenpixel entsprechend markiert. Das kann beispielsweise wie folgt geschehen:

(A) Segmentierung des Hintergrundes: Eine Segmentierung des Hintergrundes kann beispielsweise anhand der Helligkeit erfolgen, wobei alle Pixel, deren Helligkeit einen Schwellwert überschreiten als Hintergrund markiert werden. In dem RGB-Bild lässt sich die Helligkeit beispielsweise durch die Farbkombination $(r + g + b)/3$ parametrisieren, wobei r, g, b jeweils die roten, grünen und blauen Farbwerte in dem RGB-Bild sind. Der Schwellwert kann beispielsweise einen Wert zwischen 150 und 400 oder zwischen 220 und 270 oder ungefähr 245 betragen (z. B. auf einer Intensitätsskala von 0 bis 500). Um beispielsweise eventuell auftretende störende Partikel im Bild zu beseitigen, kann es ferner sinnvoll sein, die Hintergrundmaske durch morphologische Filter (sogenanntes Opening oder Closing) nachzubearbeiten.

(B) Trennung von Leukozyten und Erythrozyten: Um Übergänge von Leukozyten zu Erythrozyten zu identifizieren, wird beispielsweise zunächst eine pixelweise Segmentierung des nach dem Schritt (A) segmentierten Vordergrundes durchgeführt. Diese Segmentierung kann beispielsweise aufgrund verschiedener Farb- oder Texturmerkmale erfolgen. Im einfachsten Fall wird ein Schwellwertverfahren verwendet, um anhand eines Farbtons der Pixel (Hue-Kanal des HSI/HSV-transformierten Bildes) eine Trennung von Leukozyten und Erythrozyten zu erreichen. Der Schwellwert kann mit Hilfe bekannter Schwellwertverfahren (z. B. das Verfahren von Otsu) bestimmt werden.

In einem vierten Schritt 540 erfolgt eine Mittelpunktsbestimmung und eine Polartransformation. Unter der Annahme, dass Leukozyten in der Regel eine konvexe Umrandung aufweisen und oftmals annähernd kreisförmig sind, wird in diesem Schritt der Mittelpunkt der Zelle zunächst geschätzt und ausgehend von diesem Mittelpunkt eine Polartransformation der im vorhergehenden Schritt extrahierten Kontur-Kandidatenpixel (Kontur-Kandidatenbildpunkte K) berechnet. Als Zellmittelpunkt $P_z$ dient im einfachsten Fall der Schnittpunkt oder Schwerpunkt der Region des ausgewählten Leukozyten. Alle Kontur-Kandidatenbildpunkte K werden nun mit Bezug zu diesem Zentrumspunkt $P_z(x_0, y_0)$ mit Hilfe der Funktion f(x, y) polartransformiert:

$$f : \mathbf{R}^2 \to ([-\pi, \pi], \mathbf{R}^+) \quad , \qquad (1)$$

$$\begin{bmatrix} \theta \\ R \end{bmatrix} = f(x, y) = \begin{bmatrix} \arctan((y - y_0)/(x - x_0)) \\ \sqrt{(x - x_0)^2 + (y - y_0)^2} \end{bmatrix} \quad , \qquad (2)$$

wobei x und y zwei orthogonale Koordinaten sind, die das Bild parametrisieren.

Unter der Voraussetzung, dass die Zelle tatsächlich annähernd kreisförmig sein sollte und der Mittelpunkt korrekt bestimmt wurde, würde sich somit als (mögliche) Zellkontur eine annähernd konstante Funktion ergeben, d.h. unabhängig von dem Winkel θ und konstant in der Entfernung R (dem Radius). Je weiter der verwendete Zentrumspunkt jedoch vom tatsächlichen Zellmittelpunkt abweicht, desto stärker weicht die polartransformierte von einer konstanten Funktion ab. Daher ist eine robuste Mittelpunktschätzung wünschenswert. Eine robustere Schätzung des Zellmittelpunkts kann mit Hilfe der im vorherigen Schritt (dritten Schritt 530, Generierung von Kontur-Kandidatenbildpunkten) geschätzten Kontur-Kandidatenbildpunkte K durchgeführt werden.

Die Bestimmung des Zellmittelpunktes kann außerdem durch ein Optimierungsverfahren erreicht werden, wobei innerhalb der Zelle nach dem optimalen Zellmittelpunkt gesucht wird. Die einzelnen Schritte eines solchen Verfahrens können wie folgt zusammengefasst werden:

(1) Erstellen eines gleichmäßigen Gitters mit einem beispielhaften Gitterabstand t, wobei das Gitter beispielsweise eine Größe von 3x3 Gitterpunkten aufweisen kann und so positioniert wird, dass das Zentrum des Gitters mit dem aktuellen Mittelpunkt übereinstimmt.

(2) Berechnen eines Gütemaßes für jeden Gitterpunkt oder für jeden Gitterquadranten. Das Gütemaß bewertet dabei die Wahrscheinlichkeit mit der der aktuelle Gitterpunkt dem Zellmittelpunkt entspricht und wird beispielsweise dadurch berechnet, dass mit Hilfe eines robusten Schätzverfahrens (z. B. RANSAC) ein Modell an die Kontur-Kandidatenpunkte angepasst wird und dann beispielsweise der mittlere quadratische Fehler (Mean Square Error, MSE) der Konturpunkte von dem entsprechenden Modell bestimmt wird. Als Modell kann dabei im einfachsten Fall eine konstante Funktion für die r-Koordinate verwendet werden.

(3) Solange der Gitterabstand t größer ist als die Größe eines Pixels, kann das Verfahren mit dem Schritt (1) fortgesetzt werden, wobei jedoch der Gitterabstand entsprechend verkleinert wird (z. B. t → t/2 oder t → t/3 gesetzt wird).

In einem fünften Schritt 550 erfolgt eine Gewichtung der Kontur-Kandidaten beispielsweise in der folgenden Weise. Da nach der Bestimmung von möglichen Kontur-Kandidaten einige Punkte innerhalb der Menge $C_{f,b}$ keinen Konturpunkt am Rande des Leukozyten darstellen und für eine weitere Bearbeitung störend sind, ist es erforderlich, diese störenden Punkte zunächst zu eliminieren. Hierzu können beispielsweise Punkte innerhalb der Menge $C_{f,b}$ bestimmt werden, bei denen eine starke Krümmung der Kontur auftritt. Die starke Krümmung kann beispielsweise durch einen Sprung oder einem plötzlichen Anwachsen der Entfernung R zum Mittelpunkt hervorgerufen sein. Zwischen den Punkten mit starker Krümmung werden nun alle potentiell fehlerhaften Konturpunkte Ke verworfen (siehe auch Fig. 4), falls das Kontursegment stark von einer konstanten Funktion abweicht. Diese Abweichung kann wiederum mit einem Schwellwertverfahren bestimmt werden. Die Suche nach solchen Punkten entspricht beispielsweise der Lokalisierung von Erythrozyten, die an Leukozyten anliegen.

In einem sechsten Schritt 560 erfolgt eine Pfadverfolgung, bei der die in dem vorherigen Schritt ermittelten Punkte (=verbleibende Kontur-Kandidatenbildpunkte) mit Hilfe eines Pfadverfolgungsverfahrens zu einer geschlossenen Kurve (Kontur) verbunden werden.

In einem siebten Schritt 570 erfolgt eine Nachbearbeitung der Leukozytenkontur, da die in dem sechsten Schritt 560 ermittelte Kontur immer noch einige Ausreißerpunkte enthalten kann, die beseitigt werden sollten. Dies kann beispielsweise dadurch geschehen, dass die gesamte Kontur mittels eines Median-Filters bearbeitet wird.

In einem achten Schritt 580 erfolgt schließlich eine Segmentierung des Zellkerns. Um in diesem Schritt den Zellkern zu ermitteln, wird auf der gesamten Region innerhalb der Plasmakontur (=innerhalb der konvex angeordneten Kontur-Kandidatenbildpunkten K) ein Schwellwertverfahren angewendet. Dieses Schwellwertverfahren kann wiederum das Verhältnis zwischen dem Grün- und Blaukanal als Grundlage verwenden (wie im ersten Schritt 510). Da bei der Anwendung des Schwellwertverfahrens noch einige störende Regionen innerhalb des Plasmas vorhanden sein können, ist es sinnvoll, in einem weiteren Nachbearbeitungsschritt diese störenden Regionen zu entfernen. Hierzu kann beispielsweise wiederum ein morphologischer Open/Close-Filter verwendet werden.

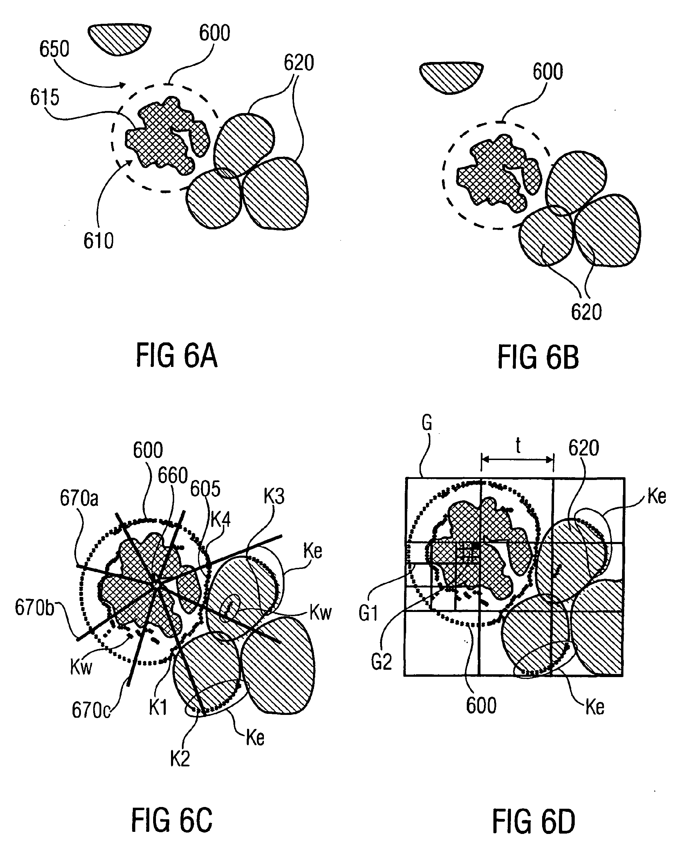

Figuren 6a bis 6h zeigen Zwischenergebnisse für die einzelnen Verfahrensschritte.

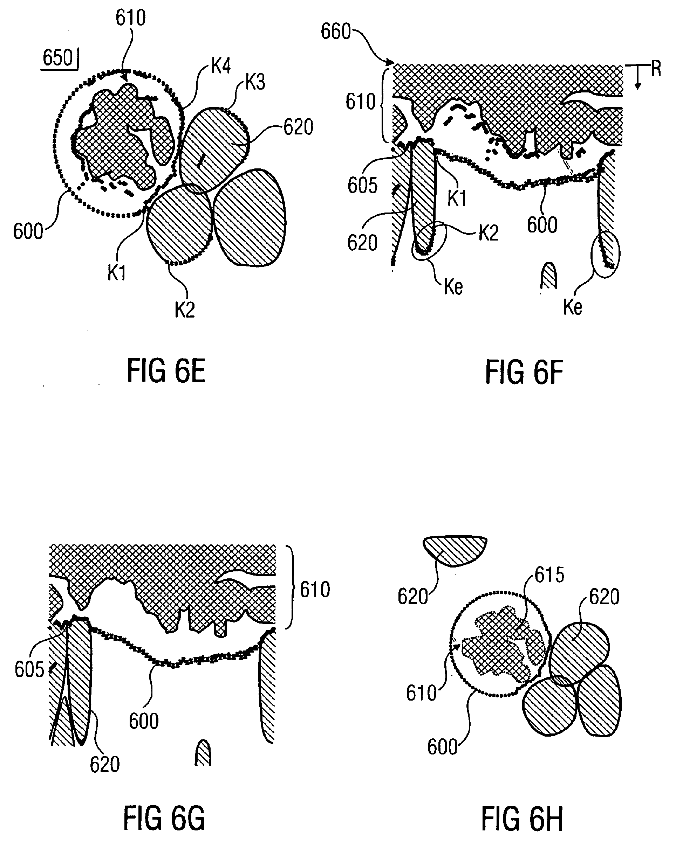

Figur 6a zeigt das Eingabebild mit einem Leukozyten 610, der einen Zellkern 615 aufweist und durch eine Kontur 600 begrenzt wird. Zwischen der Kontur 600 und dem Zellkern 615 befindet sich das Zellplasma. An dem Leukozyten 610 sind mehrere Erythrozyten 620 angeordnet, wobei die genaue Trennlinie zwischen den Leukozyten 610 und den Erythrozyten 620 in dem Eingangsbild nicht klar ersichtlich ist. Der Leukozyt 610 ist vor einem Hintergrund 650 (z. B. ein Serum, Blut oder eine andere Flüssigkeit) dargestellt. Das Eingabebild weist im allgemeinen mehrere Leukozyten auf, wobei die Figur 6 bereits auf einen der mehreren Leukozyten 610 fokussiert wurde. Die hier gezeigte Darstellung ist gleichermaßen anwendbar für allgemeine organische Zellen 610 und weiterer organischer Zellen 620. Lediglich beispielhaft soll im folgenden weiterhin das Beispiel von Leukozyten als organische Zellen 610 und Erythrozyten als weitere organischen Zellen 620 beschrieben werden.

Figur 6b zeigt zunächst eine Vorbereitung, die beispielsweise eine Kuwahara-Filterung umfassen kann, wobei die beispielhafte Kuwahara-Filterung ein nicht-linearer glättender Filter ist, der die Kanten erhält. Diese optionale Filter-Vorverarbeitung ist häufig sinnvoll, um die Umrisse von Objekten im Bild klarer darzustellen, so dass die spätere Segmentierung des Leukozyten 610 bessere Ergebnisse liefert.

Figur 6c zeigt das Ergebnis des Folgeschrittes, bei dem zunächst ein Mittelpunkt 660 geschätzt wurde und ausgehend von dem Mittelpunkt 660 sternförmige Pfade 670a, b, c.... ausgebildet sind. Entlang der sternförmig ausgebildeten Pfade 670 werden bei diesem Verfahrensschritt zunächst die Kontur-Kandidatenpunkte K ermittelt, die in Fig. 6c als Kontur 600 dargestellt sind. Die Kontur-Kandidatenpunkte K können dabei beispielsweise durch einen Wechsel von einem ersten Farbtonwert in einen zweiten Farbtonwert festgestellt werden (z.B. durch ein plötzliches Ändern einer bestimmten Farbkomponente, siehe Figur 3). Als Folge werden sowohl die Konturpunkte 600 bestimmt als auch zusätzliche Kontur-Kandidatenbildpunkte Ke, die eine Kontur der Erythrozyten bzgl. des Hintergrundes 650 bilden - nicht jedoch Konturpunkte des Leukozyten bzgl. des Hintergrundes 650 darstellen. Außerdem werden bei diesem Schwellwertverfahren Konturpunkte eines Konturabschnitts 605 festgestellt (zwischen den Kontur-Kandidatenbildpunkten K1 und K4), die eine Trennlinie zwischen den Leukozyten 610 und den Erythrozyten 620 darstellen. Schließlich werden weitere Kontur-Kandidatenbildpunkte Kw lokalisiert, die sich entweder des Erythrozyten 620 oder innerhalb des Leukozyten 610 befinden. Sowohl die weiteren Kontur-Kandidatenbildpunkte Kw als auch die zusätzlichen Kontur-Kandidatenbildpunkte Ke betreffen Kontur-Kandidatenbildpunkte, die für die Segmentierung des Leukozyten nicht erforderlich bzw. hinderlich sind und werden deshalb in einem folgenden Verfahrensschritt eliminiert.

Figur 6d zeigt wie der Mittelpunkt 660 optimiert werden kann. Da der Mittelpunkt in einem ersten Schritt geschätzt wurde (beispielsweise über eine Schwerpunktschätzung des Leukozyten oder des Kerns des Leukozyten) entspricht der Mittelpunkt 660 häufig nicht dem wirklichen Mittelpunkt des Leukozyten 610. Um eine Verbesserung zu erreichen, kann beispielsweise ein Gitter G auf den Leukozyten derart gelegt werden, dass die meisten oder möglichst alle Kontur-Kandidatenbildpunkte K, Ke, Kw durch das Gitter G erfasst werden. Das Gitter G kann beispielsweise ein 3x3 Gitter sein, wobei sich die jeweiligen drei Gitterpunkte in einem Gitterabstand t befinden und der geschätzte Mittelpunkt beispielsweise mittig in dem Gitter angeordnet ist. Anschließend kann das Gitter nun derart verfeinert werden, dass der Gitterquadrant mit der höchsten Wahrscheinlichkeit, dass sich innerhalb des Gitterquadranten der Mittelpunkt 660 befindet, mit einem weiteren, kleineren Gitter versehen werden. Das kleinere Gitter G1 kann beispielsweise wieder ein 3x3 Gitter umfassen, wobei jeder Gitterpunkt des kleineren Gitters G1 einen Gitterabstand von t/3 aufweist und jedem Gitterpunkt wiederum ein Gütemaß zugeordnet wird, welches die Wahrscheinlichkeit angibt, dass sich der wahre Mittelpunkt 660 innerhalb des Gitterquadranten befindet. Dieser Prozess kann sukzessive fortgesetzt werden bis der wahre Mittelpunkt 660 mit einer ausreichenden Wahrscheinlichkeit (z.B. mit einer Fehlertoleranz von $\pm$20% oder $\pm$10% oder $\pm$5%) ermittelt wurde. Alternativ können die Iterationen zur Mittelpunktsbestimmung solange fortgesetzt werden, bis die Größe eines Gittersegmentes oder Gitterquadranten einem Pixel (einem Bildpunkt) entspricht.

Um einschätzen zu können, wie gut der jeweilige Mittelpunkt 660 in dem iterativen Verfahren ist, kann beispielsweise das Bild abgerollt oder abgewickelt werden, so dass R und $\theta$ ein orthogonales Koordinatensystem bilden. Sofern der Mittelpunkt 660 in sehr guter Übereinstimmung mit dem wahren Mittelpunkt gefunden wurde, würde die Kontur 600 sich weitestgehend einer im Wesentlichen flachen Linie in dem abgewickelten Bild annähern -abgesehen von jenen Abschnitten, die die zusätzlichen Kontur-Kandidatenbildpunkte Ke aufweisen. Im allgemeinen kann häufig davon ausgegangen werden, dass ein Leukozyt 610 eine nahezu runde Form aufweist.

Die Figuren 6e und 6f zeigen den Abwicklungsprozess. Die Figur 6e mit der Figur 6c übereinstimmt (der Mittelpunkt 660 wurde dabei nicht eingezeichnet) zeigt Kontur-Kandidaten, wobei unterschieden wird zwischen einem Übergang zum Hintergrund 650 und einem Übergang von einem Leukozyten 610 zu einem Erythrozyten 620 (zwischen den Konturpunkten K1 und K4).

Die Figur 6f zeigt das Resultat der Abwicklung, wobei der Punkt R = 0 dem Mittelpunkt 660 entspricht und R die radiale Entfernung von dem Mittelpunkt darstellt. Der Mittelpunkt 660 ist somit in der Figur 6f als die obere Linie dargestellt, wobei nach unten die radiale Entfernung R von dem Mittelpunkt 660 zunimmt. In horizontaler Richtung ist dabei der Polarwinkel θ dargestellt. Dementsprechend ist in der Figur 6f der Erythrozyten 620 und der Leukozyten 610 deformiert dargestellt, wobei die Kontur 600 zumindest stückweise nahezu konstant ist.

Im Allgemeinen werden die Funktionen eine wellige Struktur bei der Abwicklung aufweisen, was eine Verbesserung des Mittelpunktes erfordert. Zur Qualitätsbestimmung für den jeweiligen Mittelpunkt 660 kann nun ein Mittelwert für die Konturpunkte 600 gebildet werden und das mittlere Abstandsquadrat (Schwankungsbreite) von dem bestimmten Mittelwert bestimmt werden. Je größer die Schwankungsbreite ist, desto schlechter ist der jeweils bestimmte Mittelwert. Solange die bestimmte Schwankungsbreite oberhalb eines Schwellwertes liegt, kann der iterative Prozess (zu immer kleiner werdenden Gittern, siehe Figur 6d) fortgesetzt werden. In jedem iterativen Schritt sollte sich die Schwankungsbreite verringern - sofern sich die Schwankungsbreite vergrößert, kann das gleichzeitig derart gedeutet werden, dass damit ein bereits sehr gut bestimmter Mittelpunkt 660 gefunden wurde.

Die Figur 6f zeigt somit sowohl die Kontur 600 als auch den Konturabschnitt 605 (links neben K1). Ferner sind die Konturbildpunkte Ke gezeigt, die sich in einer größeren Entfernung von der Kontur 600 befindet, da die radiale Entfernung R der zu eliminierenden Konturbildpunkte Ke von dem Mittelpunkt 660 deutlich größer ist (siehe Figur 6d).

Um herauszufinden, welche Konturbildpunkte zu den zu eliminierenden Konturbildpunkte Ke gehören, können sämtliche Kontur-Kandidatenbildpunkte K zu einer Kurve verbunden werden, wobei die Punkte mit extrem starker Krümmung (z.B. zwischen dem Konturbildpunkt K1 und dem Konturbildpunkt K2 ein Indiz dafür darstellt, dass die Kontur 600 an dieser Stelle einen Sprung macht und die zu eliminierenden Konturbildpunkte Ke folgen.

Die Figur 6g zeigt das Ergebnis nach der Eliminierung der zusätzlichen Konturpunkte Ke. Nach dem Eliminieren der zusätzlichen Konturpunkte Ke kann beispielsweise ein Pfadverfolgungsalgorithmus genutzt werden, um die Kontur 600 mit dem zusätzlichen Konturabschnitt 605 zu einer einheitlichen Kontur 600 zu verbinden.

Die Figur 6h zeigt das Ergebnis dieser Segmentierung, d.h. der Leukozyt 610 weist eine einheitliche Kontur 600 auf, die teilweise zwischen dem Leukozyten 610 und dem Erythrozyten 620 verläuft. Ferner weist der Leukozyt einen Kern 615 auf.

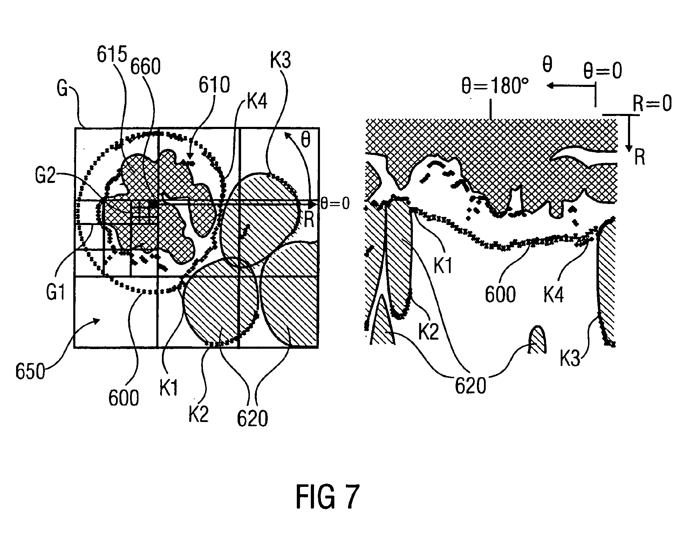

Fig. 7 veranschaulicht die iterative Suche des Zellmittepunktes 660. Auf die Region, die die Kontur-Kandidatenbildpunkten K enthält, wird zunächst ein Gitter gelegt. Das Gitter kann beispielsweise 3x3 Gitterpunkte (oder allgemein NxM Gittepunkte, mit N,M = 2,3,4,...) aufweisen, so dass möglichst alle identifizierte Kontur-Kandidatenbildpunkte K innerhalb des Gitters liegen. Jedem Gittersegment (Gitterquadrant) oder Gitterpunkt wird dann ein Maß zugeordnet, welches die Wahrscheinlichkeit angibt, dass innerhalb des Gitterpunktes der Mittelpunkt 660 der Zelle 610 vorhanden ist. Daran anschließend wird das Gittersegment ausgewählt, der die höchste Wahrscheinlichkeit aufweist, dass innerhalb dieses Gittersegmentes der Zellmittelpunkt lokalisiert ist. Anschließend wird in dem identifizierten Gittersegment ein neues Gitter G1 (z. B. wiederum ein 3x3 Gitter) gelegt und die Prozedur wiederholt sich, so dass wiederum jedem Gittersegment des zweiten Gitters G1 eine Wahrscheinlichkeit zugeordnet wird, dass innerhalb des Gittersegmentes der Zellmittelpunkt 660 angeordnet ist. Nachdem wiederum jenes Gittersegment mit der höchsten Wahrscheinlichkeit identifiziert wurde, wird über das ermittelte Gittersegment ein drittes Gitter G2 gelegt und die Schrittfolge wiederholt sich sukzessiv. Damit wird iterativ (durch eine feinere Granularisierung) der Zellmittelpunkt an den wahren Zellmittelpunkt angenähert.

Die Wahrscheinlichkeit, die jedem Gittersegment zugeordnet wird kann beispielsweise wie folgt ermittelt werden. Es wird dazu angenommen, dass beispielsweise der Mittelpunkt (oder ein anderer Punkt) des Gittersegments den Zellmittelpunkt 660 darstellt. Anschließend erfolgt eine Koordinatentransformation der Positionen der Kontur-Kandidatenbildpunkten K zu polaren Koordinaten bezüglich des angenommenen Mittelpunktes, d. h. es wird eine Entfernungskoordinate $R_i$ zu dem angenommenen Zellmittelpunkt 660 (= Mittelpunkt des jeweiligen Gittersegmentes i=1,...,9) und eine entsprechende polare Winkelvariable berechnet. Damit ergeben sich für die Konturkandidatenbildpunkte eine Funktionen $R_i = R_i (θ)$ (für jedes Gittersegment eine Funktion) .

Da jedoch für den wahren Zellmittelpunkt die Kontur-Kandidatenbildpunkte eine nahezu konstante Funktion (R = konstant) bilden, werden sich die Funktionen für die einzelnen Gittersegmente stark voneinander unterscheiden und in der Regel keiner konstanten Funktion ähneln. Jede Funktion $R_i$ für die Kontur-Kandidatenbildpunkte K, die sich am ehesten durch eine konstante Funktion annähern lässt (unter allen neun Kurven) stellt dabei den Gitterpunkt mit der höchsten Wahrscheinlichkeit für den Zellmittelpunkt 660 dar. Als Maß für die Annäherung an eine konstante Funktion kann dabei beispielsweise der quadratische Fehler dienen, wobei zunächst ein Mittelwert gebildet wird und danach der quadratische Fehler bestimmt wird. Bei weiteren Ausführungsbeispielen können auch andere statistische Größen als Maß für die Wahrscheinlichkeit, dass der Zellmittelpunkt 660 in einem Gittersegment liegt, genommen werden. Ein weiteres Beispiel wäre die Standardabweichung oder ein gewichtetes Maß für die Abweichung.

In der Fig. 7 auf der rechten Seite ist die Kontur 600 der Kontur-Kandidatenbildpunkte K gezeigt, bei dem der die Mittelpunktschätzung bereits ein sehr gutes Resultat geliefert hat (die Kontur 600 ist über weite Bereiche nahezu konstant). Die in der Fig. 7 rechts gezeigte Mittelpunktschätzung resultiert somit aus einer Abwicklung der Kontur (in der Fig. 7 links gezeigt), um einen Mittelpunkt 660 heraus, der bereits eine gute Schätzung liefert.

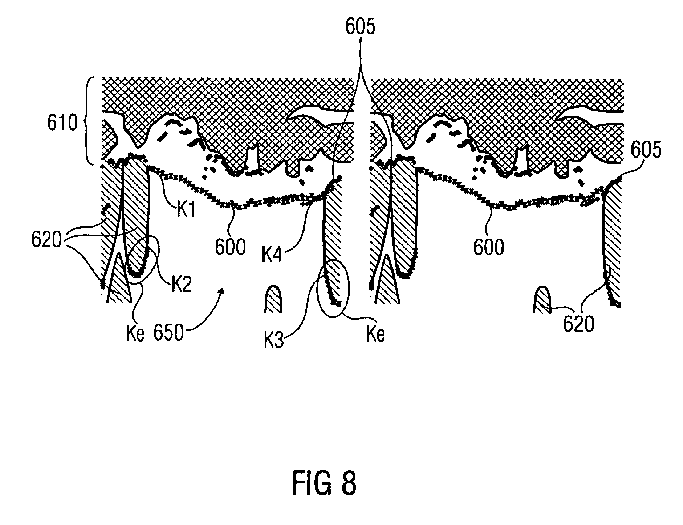

Fig. 8 zeigt eine Darstellung für die Menge Ke der Punkte $C_{f,b}$, die zwischen zwei Stellen extremer Krümmung eliminiert werden sollen. Die Fig. 8 links zeigt dabei wiederum die abgewickelte Kontur, die noch die zu eliminierenden zusätzlichen Kontur-Kandidatenbildpunkte Ke enthält und die Fig. 8 rechts zeigt die entsprechende Darstellung, bei der die zu eliminierenden zusätzlichen Kontur-Kandidatenbildpunkte Ke entfernt wurden. Die Kontur 600 der Kontur-Kandidatenbildpunkte K, die den Übergang zwischen dem Zellplasma und dem Hintergrund 650 signalisieren, springen dabei ab dem ersten Kontur-Kandidatenbildpunkt K1 auf den zweiten Kontur-Kandidatenbildpunkt K2, wobei der zweite Kontur-Kandidatenbildpunkt K2 irrtümlicherweise als ein Konturpunkt zwischen dem Zellplasma und dem Hintergrund 650 identifiziert wurde und eigentlich ein Konturpunkt zwischen dem Erythrozyten 620 und dem Hintergrund 650 darstellt. Beim Verbinden der Kontur 600 mit den zu eliminierenden zusätzlichen Kontur-Kandidatenbildpunkten Ke würde sich somit an der Stelle des ersten Kontur-Kandidatenbildpunktes K1 eine sehr starke Krümmung herausbilden, die ein klares Indiz dafür ist, dass die zusätzlichen Kontur-Kandidatenbildpunkte Ke nicht zu der Zellkontur des Leukozyten 610 gehören. Deshalb werden die zwischen derartigen Sprüngen oder derartigen starken Krümmungen liegenden zusätzlichen Kontur-Kandidatenbildpunkte Ke eliminiert. Das Ergebnis ist in der Fig. 8 rechts gezeigt, die die Kontur-Kandidatenbildpunkte Ke, die einen Konturrand der Erythrozyten darstellen, eliminiert wurden. Die Kontur 600 kann dann mit dem Konturabschnitt 605 verbunden werden, wobei die Kontur 605 die Grenzlinie zwischen den Leukozyten und den Erythrozyten markiert.

Fig. 9 zeigt eine Bildverarbeitung mittels eines Kuwahar-Filters, der einen nicht-linear glättenden Filter darstellt und der die Kanten erhält und für eine Bildvorverarbeitung sinnvoll ist (siehe KUWAHARA, M., K. HACHIMURA, S: EIHO und M. KINOSHITA: Digital Processing of Biomedical Images. Plenum Press, New York, USA: 1976). Wie in Fig. 9 gezeigt, werden dabei um einen gegebenen Bildpunkt 161 herum ein Gebiet mit einer ungeraden Anzahl von Bildpunkten (5x5 in Fig. 2b) gebildet, so dass der gegebene Bildpunkt 161 in der Mitte des Gebietes liegt. Schließlich werden vier Regionen 161a, 161b, 161c, 161d gebildet, so dass der zentrale Bildpunkt 161 jeweils ein Eckpunkt der vier Regionen 161a, ... , 161d darstellt. Für jede Region wird eine durchschnittliche Helligkeit mit einer entsprechenden Standardabweichung gebildet. Das Kuwahara-Filter ordnet nun den zentralen Bildpunkt 161 den durchschnittlichen Wert jener Region zu, die die kleinste Standardabweichung aufweist.

In Ausführungsbeispielen können ebenfalls die eingangs erwähnten konventionellen Schwellwertverfahren genutzt werden, um einen Wechsel in einem bestimmten Farbtonwert zu erfassen (z. B. um die Kontur-Kandidatenbildpunkte K entlang der Pfade zu erfassen). Ebenso können die erwähnten konventionellen Pfadfindungsalgorithmen bei Ausführungsbeispielen genutzt werden - beispielsweise um die Vielzahl der Kontur-Kandidatenbildpunkte K zu einer kontinuierlichen Kontur 600 zu verbinden.

Bei weiteren Ausführungsbeispielen werden die Gebiete starker Krümmung oder Sprünge in der Entfernung R in einer Frequenzdarstellung ermittelt. Sofern die Kontur 600 nahezu ideal kreisförmig ist, werden nur niedrige Frequenzen auftreten. Sprünge (starke Krümmungen) zeigen sich jedoch in vermehrt auftretenden hohen Frequenzen in der Frequenzdarstellung und können beispielsweise ebenfalls mittels eines Schwellwertverfahrens ermittelt werden.

Weitere Ausführungsbeispiele umfassen ein Verfahren, bei dem die Mehrzahl von Pfaden 670 zwischen 50 und 400 oder zwischen 140 und 220 oder ungefähr 180 Pfade umfassen oder ein Verfahren, bei dem die Schritte des Bestimmens des vorläufigen und des weiteren Objektmittelpunktes einen Schritt eines Anordnens eines Gitters mit einem ersten und einem zweiten Gittersegment aufweist, wobei als vorläufiger Objektmittelpunkt ein vorbestimmter Punkt in dem ersten Gittersegment gewählt wird. Als weiterer Objektmittelpunkt wird ein vorbestimmter Punkt in dem zweiten Gittersegment gewählt, wobei der Schritt des Auswählens ein Auswählen eines Gittersegments mit einem höchsten Gütemaß umfasst.

Weitere Ausführungsbeispiele umfassen ein Verfahren, bei dem der Wechsel des Farbtonwertes durch einen Wechsel in dem H-Kanal eines HSI- oder HSV-transformierten Bildes festgestellt wird. Bei dem beispielhaften Verfahren umfasst das Bestimmen der Kontur 600 auf der Basis der verbleibenden Kontur-Kandidatenbildpunkte K einen Pfad-Verfolgungsverfahren, wobei das Pfad-Verfolgungsverfahren eine geschlossene Kurve als Kontur 600 erzeugt.

Bei dem erfindungsgemäßen Verfahren kann beispielsweise die Mehrzahl der Pfade 670 zwischen 50 und 400 oder zwischen 140 und 220 liegen oder ungefähr 180 Pfade umfassen.

Ausführungsbeispiele umfassen ebenfalls eine Vorrichtung, bei der die Einrichtung zum Auswerten ausgebildet ist, um das Gütemaß und das weitere Gütemaß aus einer Schwankungsbreite der Entfernungen R zu einer mittleren Entfernung $R_m$ zu bestimmen.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

Obige Ausführungsbeispiel beschrieben somit auch ein Verfahren sowie eine entsprechende Vorrichtung zum Ermitteln eines Mittelpunktes (660) einer organischen Zelle (610) mit einem Zellkern (615) und Zellplasma um dieselben in einem digitalen Bild zu segmentieren, wobei das Zellplasma durch eine Kontur (600) des Objekts (610) von einem Hintergrund (650) abgegrenzt ist und durch eine Vielzahl von Kontur-Kandidatenbildpunkten (K) definiert ist, mit folgenden Schritten: (a) Bestimmen eines vorläufigen Objektmittelpunktes; (b) Bestimmen von Entfernungen (R) der Vielzahl von Kontur-Kandidatenbildpunkte (K) zu dem vorläufigen Objektmittelpunkt; (c) Auswerten der Entfernungen (R), um ein Gütemaß für den vorläufige Objektmittelpunkt zu erhalten; (d) Bestimmen eines weiteren Objektmittelpunktes und wiederholen der Schritte (b) und (c) für den weiteren Objektmittelpunkt, um ein weiteres Gütemaß zu erhalten; und (e) Auswählen eines Objektmittelpunktes (660) aus dem vorläufigen oder dem weiteren Objektmittelpunkt unter Nutzung des Gütemaßes und des weiteren Gütemaßes. Der Schritt (c) kann folgende Unterschritte aufweisen, nämlich (c1) Bestimmen einer mittleren Entfernung ($R_m$) von den Entfernungen (R); (c2) Bestimmen einer Schwankungsbreite der Entfernungen (R) zu der mittleren Entfernung ($R_m$), um aus der bestimmten Schwankungsbreite das Gütemaß zu bestimmen. Der Schritt (a) kann einen Schritt eines Anordnens eines Gitters mit einem ersten und einem zweiten Gittersegment aufweisen, wobei als vorläufiger Objektmittelpunkt ein vorbestimmter Punkt in dem ersten Gittersegment gewählt wird und wobei als weiterer Objektmittelpunkt ein vorbestimmter Punkt in dem zweiten Gittersegment gewählt wird, wobei der Schritt (e) ein Auswählen eines Gittersegments mit einem höchsten Gütemaß umfassen kann. dabei können die Schritte (a) bis (d) iterativ fortgesetzt werden, indem in das Gittersegment mit dem höchsten Gütemaß ein weiteres Gitter mit einer Vielzahl weiterer Gittersegmente angeordnet wird, wobei jedem weiteren Gittersegment ein weiteres Gütemaß zugeordnet wird und ein weiteres Gittersegment mit einem höchsten weiteren Gütemaß ausgewählt wird.

## Patentansprüche

1. Verfahren zum Ermitteln einer Kontur (600) eines Objektes (610) in einem digitalen Bild, mit folgenden Schritten:

Bestimmen eines vorläufigen Objektmittelpunktes (660);
Bestimmen von Kontur-Kandidatenbildpunkten (K) als Bildpunkte auf einer Mehrzahl von vom vorläufigen Objektmittelpunkt (660) aus wegführenden Pfaden (670) durch Erfassen eines Wechsels von einem ersten Abschnitt zu einem zweiten Abschnitt eines auf einem Bildpunktwertebereich des digitalen Bilds basierenden Merkmalsraums oder durch Erfassen eines Überschreitens einer vorbestimmten Stärke einer Merkmalsänderung in dem Merkmalsraum, wobei das Erfassen entlang der wegführenden Pfade (670) ausgeführt wird und die Kontur-Kandidatenbildpunkte (K) Entfernungen (R) zum vorläufigen Objektmittelpunkt (660) aufweisen und entsprechend eines Polarwinkels ($\theta$) geordnet sind;
Auswerten der Entfernungen (R), um ein Gütemaß für den vorläufigen Objektmittelpunkt zu erhalten;
Bestimmen eines weiteren Objektmittelpunktes und weiterer Entfernungen der Kontur-Kandidatenbildpunkte (K) zu dem weiteren Objektmittelpunkt;
Auswerten der weiteren Entfernungen, um eine weiteres Gütemaß zu erhalten, wobei das Gütemaß und das weitere Gütemaß Wahrscheinlichkeiten, dass der betreffende vorläufige oder weitere Objektmittelpunkt (660) mittig in der Kontur (600) liegt, angeben;
Auswählen eines verbesserten Objektmittelpunktes (660) aus dem vorläufigen oder dem weiteren Objektmittelpunkt unter Nutzung des Gütemaßes und des weiteren Gütemaßes;
Bestimmen von Zonen (Z) von benachbarten Kontur-Kandidatenbildpunkten, innerhalb derer eine Änderung der Entfernungen (R) oder der weiteren Entfernungen der Kontur-Kandidatenbildpunkte (K) oberhalb eines Schwellwertes (T) liegt;
Eliminieren von Kontur-Kandidatenbildpunkten (Ke), die zwischen den Zonen (Z) von benachbarten Kontur-Kandidatenbildpunkten liegen und größere Entfernungen (R) als die verbleibenden Kontur-Kandidatenbildpunkten (K) aufweisen; und
Bestimmen der Kontur (600) auf der Basis der verbleibenden Kontur-Kandidatenbildpunkte (K).

2. Verfahren nach Anspruch 1, bei dem der Schwellwert (T) 5% oder 10% oder 50% der Entfernung (R) entspricht.

3. Verfahren nach Anspruch 1 oder Anspruch 2, das ferner den Schritt eines Vorverarbeitens des digitalen Bildes umfasst,
wobei das Vorverarbeiten ein Filtern des digitalen Bildes aufweist, wobei ein Filter ein kantenerhaltender Glättungsfilter oder ein anisotropes Filter aufweist, oder
wobei das Vorverarbeiten ein Erfassen von Größen von Objekten und ein Eliminieren von Objekten, die unterhalb einer Mindestgröße liegen, aufweist.

4. Verfahren nach einem der vorhergehenden Ansprüche, das ferner den Schritt eines Nachbearbeitens für die Kontur (600) aufweist,
wobei die Nachbearbeitung einen Median-Filter oder einen morphologisches Filter umfasst.

5. Verfahren nach einem der vorhergehenden Ansprüche, bei dem der Schritt des Bestimmens von Kontur-Kandidatenbildpunkten (K) ein Überprüfen von Bildpunkten aufweist, ob eine Summe ihrer drei Farbkomponenten in einem RGB-Farbraum eine vorbestimmte Schwelle passiert.

6. Verfahren nach einem der vorhergehenden Ansprüche, bei dem das Objekt (610) eine organische Zelle (610) mit einem Zellkern (615) und Zellplasma ist, wobei das Zellplasma durch die Kontur (600) von einem Hintergrund (650) abgegrenzt ist, wobei das Verfahren ferner ein Bestimmen eines Zellkerns umfasst und das Bestimmen des Zellkerns ein Überprüfen von Bildpunkten aufweist, ob ein Verhältnis einer grünen zu einer blauen Farbkomponente einen Schwellwert über- oder unterschreitet.

7. Verfahren nach einem der vorhergehenden Ansprüche, das ferner den Schritt eines Trennens zwischen der organischen Zelle (610) und weiterer organischer Zellen (620) aufweist, wobei das Trennen von Leukozyten und Erythrozyten (620) durch einen Wechsel eines Farbtonwertes oder eines weiteren Farbgradientenwechsels festgestellt wird.

8. Verfahren nach einem der vorhergehenden Ansprüche, das ferner den Schritt eines Segmentierens des Zellkerns (615) aufweist, wobei Bildpunkte des Zellkerns (615) durch ein Schwellwertverfahren bestimmt werden, bei dem das Verhältnis zwischen der grünen und der blauen Komponente eines RGB-Bildes einen Schwellwert über- oder unterschreitet.

9. Vorrichtung zum Ermitteln einer Kontur eines Objektes in einem digitalen Bild, wobei in dem digitalen Bild das Objekt (610) einen ersten Farbtonwert und ein Hintergrund (650) einen zweiten Farbtonwert aufweist, mit folgenden Merkmalen:

einer Einrichtung zum Bestimmen eines vorläufigen Objektmittelpunktes (660);
einer Einrichtung zum Bestimmen von Kontur-Kandidatenbildpunkten (P) als Bildpunkte auf einer Mehrzahl von vom vorläufigen Objektmittelpunkten (660) aus wegführenden Pfaden (670) durch Erfassen eines Wechsels von einem ersten Abschnitt zu einem zweiten Abschnitt eines auf einem Bildpunktwertebereich des digitalen Bilds basierenden Merkmalsraums oder durch Erfassen eines Überschreitens einer vorbestimmten Stärke einer Merkmalsänderung in dem Merkmalsraum oder durch Erfassen eines Überschreitens einer vorbestimmten Stärke einer Merkmalsänderung in dem Merkmalsraum, wobei das Erfassen entlang der wegführenden Pfade (670) ausgeführt wird und die Kontur-Kandidatenbildpunkte (K) Entfernungen (R) zum vorläufigen oder zu einem verbesserten Objektmittelpunkt (660) aufweisen und entsprechend eines Polarwinkels ($\theta$) geordnet sind;
einer Einrichtung zum Auswerten der Entfernungen (R), um ein Gütemaß für den vorläufigen Objektmittelpunkt zu erhalten, wobei das Gütemaß eine Wahrscheinlichkeit, dass der vorläufige Objektmittelpunkt (660) mittig in der Kontur (600) liegt, angibt,
einer Einrichtung zum Auswählen eines verbesserten Objektmittelpunktes (660) unter Nutzung des Gütemaßes;
einer Einrichtung zum Bestimmen von Zonen (Z) von benachbarten Kontur-Kandidatenbildpunkte, innerhalb derer eine Änderung der Entfernungen (R) der Kontur-Kandidatenbildpunkte (K) oberhalb eines Schwellwertes (T) liegen;
einer Einrichtung zum Eliminieren von Kontur-Kandidatenbildpunkten (Ke) zwischen den Zonen (Z) von Kontur-Kandidatenbildpunkten, wobei die zu eliminierenden Kontur-Kandidatenbildpunkte größere Entfernungen (R) als die verbleibenden Kontur-Kandidatenbildpunkten (K) aufweisen; und
einer Einrichtung zum Bestimmen der Kontur (600) auf der Basis der verbleibenden Kontur-Kandidatenbildpunkte.

10. Computerprogramm mit einem Programmcode zur Durchführung des Verfahrens nach einem der Ansprüche 1 bis 8, wenn das Computerprogramm auf einem Computer abläuft.

**Claims**

1. A method for determining a contour (600) of an object (610) in a digital image, comprising:

   determining a preliminary object center (660);
   determining contour candidate image points (K) as image points on a plurality of paths (670) leading away from the preliminary object center (660), by detecting a change from a first section to a second section of a feature space based on an image point value range of the digital image or by detecting the exceeding of a predetermined strength of a feature change in the feature space, wherein the detection is executed along the paths (670) leading away and the contour candidate image points (K) comprise distances (R) to the preliminary object center (660) and are ordered according to a polar angle (θ);
   evaluating the distances (R) to obtain a quality level for the preliminary object center;
   determining a further object center and further distances of the contour candidate image points (K) to the further object center;
   evaluating the further distances to obtain a further quality level, wherein the quality level and the further quality level indicate probabilities that the respective preliminary or further object center (660) is located at the center in the contour (600);
   selecting an improved object center point (660) from the preliminary or the further object center using the quality level and the further quality level;
   determining zones (Z) of neighboring contour candidate image points within which a change of the distances (R) or the further distances of the contour candidate image points (K) is above a threshold value (T);
   eliminating contour candidate image points (Ke) lying between the zones (Z) of neighboring contour candidate image points and comprising greater distances (R) than the remaining contour candidate image points (K); and
   determining the contour (600) on the basis of the remaining contour candidate image points (K),

2. The method according to claim 1, wherein the threshold value (T) corresponds to 5% or 10% or 50% of the distance (R).

3. The method according to claim 1 or claim 2, further including the step of pre-processing the digital image,
   wherein the pre-processing comprises a filtering of the digital image, wherein a filter comprises an edge-maintaining smoothing filter or an anisotropic filter, or
   wherein the pre-processing comprises detecting the sizes of objects and eliminating objects lying below a minimum size.

4. The method according to one of the preceding claims, further comprising the step of post-processing for the contour (600),
   wherein the post-processing includes a median filter or a morphological filter.

5. The method according to one of the preceding claims, wherein the step of determining contour candidate image points (K) comprises checking image points as to whether a sum of their three color components in an RGB color space passes a predetermined threshold.

6. The method according to one of the preceding claims, wherein the object (610) is an organic cell (610) with a cell nucleus (615) and cell plasma, wherein the cell plasma is delimited from a background (650) by a contour (600), wherein the method further comprises determining a cell nucleus and wherein determining the cell nucleus comprises checking image points as to whether a ratio of a green to a blue color component exceeds or falls short of a threshold value.

7. The method according to one of the preceding claims, further comprising the step of separating between the organic cell (610) and further organic cells (620), wherein the separation of leukocytes and erythrocytes (620) is determined by a change of a hue value or a further color gradient change.

8. The method according to one of the preceding claims, further comprising the step of segmenting the cell nucleus (615), wherein image points of the cell nucleus (615) are determined by a threshold value method, wherein the ratio between the green and the blue component of an RGB image exceeds or falls short of a threshold value.

9. A device for determining a contour of an object in a digital image, wherein in the digital image the object (610) comprises a first hue value and a background (650) comprises a second hue value, comprising:

means for determining a preliminary object center (660);
means for determining contour candidate image points (P) as image points on a plurality of paths (670) leading away from preliminary object centers (660) by detecting a change from a first section to a second section of a feature space based on an image point value range of a digital image or by detecting the exceeding of a predetermined strength of a feature change in the feature space or by detecting the exceeding of a predetermined strength of a feature change in the feature space, wherein detecting is executed along the paths (670) leading away and the contour candidate image points (K) comprise distances (R) to the preliminary or to an improved object center (660) and are ordered according to a polar angle (θ);
means for evaluating the distances (R) to acquire a quality level for the preliminary object center, wherein the quality level indicates a probability that the preliminary object center (660) lies in the center of the contour (600);
means for selecting an improved object center (660) using the quality level;
means for determining zones (Z) of neighboring contour candidate image points within which a change of the distances (R) of the contour candidate image points (K) lies above a threshold value (T);
means for eliminating contour candidate image points (Ke) between the zones (Z) of contour candidate image points, wherein the contour candidate image points to be eliminated comprise greater distances (R) than the remaining contour candidate image points (K); and
means for determining the contour (600) on the basis of the remaining contour candidate image points.

**10.** A computer program having a program code for executing the method according to one of claims 1 to 8, when the computer program is executed on a computer.

## Revendications

**1.** Procédé pour déterminer un contour (600) d'un objet (610) dans une image numérique, aux étapes suivantes consistant à:

déterminer un point central d'objet provisoire (660);
déterminer les points d'image candidats de contour (K) comme points d'image sur une pluralité de trajets (670) s'éloignant du point central d'objet provisoire (660) en saisissant un changement d'un premier segment à un deuxième segment d'un espace de caractéristiques se basant sur une zone de valeurs de point d'image de l'image numérique ou en saisissant un dépassement d'une intensité prédéterminée d'une variation de caractéristique dans l'espace de caractéristiques, la saisie étant effectuée le long des trajets s'éloignant (670) et les points d'image candidats de contour (K) présentant des distances (R) par rapport au point central d'objet provisoire (660) et étant disposés selon un angle polaire (θ);
évaluer les distances (R), pour obtenir une mesure de qualité pour le point central d'objet provisoire;
déterminer un autre point central d'objet et d'autres distances des points d'image candidats de contour (K) par rapport à l'autre point central d'objet;
évaluer les autres distances, pour obtenir une autre mesure de qualité, la mesure de qualité et l'autre mesure de qualité indiquant des probabilités que le point central d'objet provisoire concerné ou l'autre point central d'objet (660) se situe au centre dans le contour (600);
sélectionner un point central d'objet amélioré (660) parmi le point central d'objet provisoire ou l'autre point central d'objet à l'aide de la mesure de qualité et de l'autre mesure de qualité;
déterminer des zones (Z) de points d'image candidats de contour adjacents dans lesquels une variation des distances (R) ou des autres distances des points d'image candidats de contour (K) se trouve au-dessus d'une valeur de seuil (T);
éliminer les points d'image candidats de contour (Ke) qui se situent entre les zones (Z) de points d'image candidats de contour adjacents et qui présentent de plus grandes distances (R) que les points d'image candidats de contour (K) restants; et
déterminer le contour (600) sur base des points d'image candidats de contour (K) restants.

**2.** Procédé selon la revendication 1, dans lequel la valeur de seuil (T) correspond à 5% ou 10% ou 50% de la distance (R).

**3.** Procédé selon la revendication 1 ou la revendication 2, comportant par ailleurs l'étape consistant à prétraiter l'image numérique,
le prétraitement présentant une filtration de l'image numérique, un filtre présentant un filtre d'aplanissement obtenant les bords ou un filtre anisotrope, ou
le prétraitement présentant une saisie de grandeurs d'objets et une élimination d'objets situés au-dessous d'une grandeur minimale.

4. Procédé selon l'une des revendications précédentes, présentant par ailleurs l'étape de post-traitement du contour (600),
le post-traitement comportant un filtre de Médian ou un filtre morphologique.

5. Procédé selon l'une des revendications précédentes, dans lequel l'étape consistant à déterminer les points d'image candidats de contour (K) présente une vérification des points d'image pour savoir si une somme de leurs trois composantes de couleur dans l'espace de couleurs RGB dépasse un seuil prédéterminé.

6. Procédé selon l'une des revendications précédentes, dans lequel l'objet (610) est une cellule organique (610) avec un noyau de cellule (615) et un plasma de cellule, le plasma de cellule étant délimité par rapport à un fond (650) par le contour (600), le procédé présentant par ailleurs une détermination d'un noyau de cellule et la détermination du noyau de cellule présentant une vérification de points d'image, pour savoir si un rapport entre une composante de couleur verte et une composante de couleur bleue excède ou descend au-dessous d'un seuil.

7. Procédé selon l'une des revendications précédentes, présentant par ailleurs l'étape de séparation de la cellule organique (610) et d'autres cellules organiques (620), la séparation de leucocytes et d'érythrocytes (620) étant constatée par une variation de valeur de nuance ou une autre variation de gradient de couleur.

8. Procédé selon l'une des revendications précédentes, présentant par ailleurs l'étape de segmentation du noyau de cellule (615), les points d'image du noyau de cellule (615) étant déterminés par un procédé à valeur de seuil, dans lequel le rapport entre la composante de couleur verte et la composante de couleur bleue d'une image RGB excède ou descend au-dessous d'un seuil.

9. Dispositif pour déterminer un contour d'un objet dans une image numérique, l'objet (610) présentant dans l'image numérique une première valeur de nuance et un fond (650) présentant une deuxième valeur de nuance, aux caractéristiques suivantes:

   un moyen destiné à déterminer un point central d'objet provisoire (660);
   un moyen destiné à déterminer les points d'image candidats de contour (P) comme points d'image sur une pluralité de trajets (670) s'éloignant du point central d'objet provisoire (660) en saisissant un changement d'un premier segment à un deuxième segment d'un espace de caractéristiques se basant sur une zone de valeurs de point d'image de l'image numérique ou en saisissant un dépassement d'une intensité prédéterminée d'une variation de caractéristique dans l'espace de caractéristiques, la saisie étant effectuée le long des trajets s'éloignant (670) et les points d'image candidats de contour (K) présentant des distances (R) par rapport au point central d'objet provisoire ou par rapport au point central d'objet amélioré (660) et étant disposés selon un angle polaire ($\theta$);
   un moyen destiné à évaluer les distances (R), pour obtenir une mesure de qualité pour le point central d'objet provisoire, la mesure de qualité indiquant une probabilité que le point central d'objet provisoire (660) se situe au centre dans le contour (600);
   un moyen destiné à sélectionner un point central d'objet amélioré (660) à l'aide de la mesure de qualité;
   un moyen destiné à déterminer des zones (Z) de points d'image candidats de contour adjacents dans lesquels une variation des distances (R) des points d'image candidats de contour (K) se trouve au-dessus d'une valeur de seuil (T);
   un moyen destiné à éliminer les points d'image candidats de contour (Ke) entre les zones (Z) de points d'image candidats de contour, les points d'image candidats de contour à éliminer présentant de plus grandes distances (R) que les points d'image candidats de contour (K) restants; et
   un moyen destiné à déterminer le contour (600) sur base des points d'image candidats de contour (K) restants.

10. Programme d'ordinateur avec un code de programme pour réaliser le procédé selon l'une des revendications 1 à 8 lorsque le programme d'ordinateur est exécuté sur un ordinateur.

```
┌─────────────────────────────┐
│        Bestimmen eines      │
│ vorläufigen Objektmittelpunktes │──── 110
└─────────────────────────────┘
              │
              ▼
┌─────────────────────────────┐
│        Bestimmen von        │
│   Konturkandidatenbildpunkten │──── 120
└─────────────────────────────┘
              │
              ▼
┌─────────────────────────────┐
│       Eleminieren von       │
│   Konturkandidatenbildpunkten │──── 130
└─────────────────────────────┘
              │
              ▼
┌─────────────────────────────┐
│      Bestimmen der Kontur   │
│ auf der Basis der verbleibenden │──── 140
│   Konturkandidatenbildpunkten │
└─────────────────────────────┘
```

# FIG 1

FIG 2

FIG 3

FIG 4

| Lokalisierung | —510 |

↓

| Bildaufbereitung | —520 |

↓

| Generierung von Konturkandidatenpunkten | —530 |

↓

| Mittelpunktbestimmung und Polartransformation | —540 |

↓

| Gewichtung der Konturkandidaten | —550 |

↓

| Pfadverfolgung | —560 |

↓

| Nachbearbeitung der Leukozyten-Kontur | —570 |

↓

| Nachbearbeitung der Kern-Kontur | —580 |

# FIG 5

FIG 6A

FIG 6B

FIG 6C

FIG 6D

FIG 6E

FIG 6F

FIG 6G

FIG 6H

FIG 7

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SINHA, N. ; A. RAMAKRISHNAN.** Automation of differential blood count. *TENCON 2003. Conf. on convergent Technologies for Asia-Pacific Region,* 2003, vol. 2, 547-551
- **LIAO, Q. ; Y. DENG.** An accurate segmentation method for white blood cell images. *IEEE Intern. Symposium on Biomedical Imaging,* 2002, 245-248
- **RAMOSER, H. ; V. LAURAIN ; H. BISCHOF ; R. ECKER.** Leukocyte segmentation and classification in blood-smear images. *27th Annual Intern. Conf. of the Engineering in Medicine and Biology Society,* September 2005, 3.371-3.374
- **LEZORAY, O. ; H. Cardot.** Cooperation of color pixel classification schemes and color watershed: a study for microscopic images. *IEEE Trans. on Image Processing,* 2002, vol. 11 (7), 783-789
- **NILSSON, B. ; A. HEYDEN.** *Segmentation of Dense Leukocyte clusters,* 2001, 221-229
- **ONGUN, G. ; U. HALICI ; K. LEBLEBICIOGLU.** Automated contour detection in blood cell images by an efficient snake algorithm. *Nonlinear Analysis,* 2009, vol. 47 (9), 5839-5847
- **OTSU, N.** A threshold selection method from gray level histograms. *IEEE Trans. Systems, Man and Cybernetics,* 1979, vol. 9, 62-66
- **KITTLER, J. ; J. ILLINGWORTH.** On threshold selection using clustering criteria. *IEEE Trans. Systems, Man and Cybernetics,* 1985, vol. 15 (5), 652-654
- **KITTLER, J. ; J. ILLINGWORTH.** *Minimum error thresholding,* 1986, vol. 19 (1), 41-47
- **KAPUR, J. ; P. SAHOO ; A. WONG.** A new method for gray level picture thresholding using the entropy of histogram. *Computer Vision, Graphics and Image Processing,* 1985, vol. 29 (3), 273-285
- A note on two problems in connexion with graphs. **DIJKSTRA, E. W.** Numerische Mathematik. Mathematisch Centrum, 1959, vol. 1, 269-271
- **KUWAHARA, M. ; K. HACHIMURA ; S: EIHO ; M. KINOSHITA.** Digital Processing of Biomedical Images. Plenum Press, 1976